(19) **Europäisches Patentamt / European Patent Office / Office européen des brevets**

(11) **EP 3 391 077 B1**

(12) **FASCICULE DE BREVET EUROPEEN**

(45) Date de publication et mention de la délivrance du brevet:
**30.10.2019 Bulletin 2019/44**

(51) Int Cl.:
*G01S 11/02* (2010.01)   *G01S 5/12* (2006.01)
*G01S 5/02* (2010.01)

(21) Numéro de dépôt: **16809110.6**

(22) Date de dépôt: **14.12.2016**

(86) Numéro de dépôt international:
**PCT/EP2016/081069**

(87) Numéro de publication internationale:
**WO 2017/102884 (22.06.2017 Gazette 2017/25)**

(54) **PROCÉDÉ DE LOCALISATION DE SOURCES D'ÉMISSION D'IMPULSIONS ÉLECTROMAGNÉTIQUES DANS UN ENVIRONNEMENT COMPRENANT DES RÉFLECTEURS**

VERFAHREN ZUR ORTUNG ELEKTROMAGNETISCHER IMPULSEMISSIONSQUELLEN IN EINER UMGEBUNG MIT REFLEKTOREN

METHOD FOR LOCATING ELECTROMAGNETIC PULSE EMISSION SOURCES IN AN ENVIRONMENT INCLUDING REFLECTORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2015 FR 1502593**

(43) Date de publication de la demande:
**24.10.2018 Bulletin 2018/43**

(73) Titulaire: **Thales**
**92400 Courbevoie (FR)**

(72) Inventeurs:
• **JAHAN, Daniel**
  **29200 Brest (FR)**
• **GIACOMETTI, Romain**
  **29200 Brest (FR)**
• **CORNU, Cédric**
  **29200 Brest (FR)**

(74) Mandataire: **Lavoix**
**2, place d'Estienne d'Orves**
**75441 Paris Cedex 09 (FR)**

(56) Documents cités:
**EP-A1- 2 428 810    US-A1- 2011 140 966**
**US-A1- 2015 323 642**

**Description**

La présente invention concerne un procédé de localisation d'au moins deux sources d'émission d'impulsions électromagnétiques dans un environnement, l'environnement comprenant au moins deux réflecteurs, le procédé comprenant les étapes de :

- réception, par un détecteur, pour chaque source à localiser, pendant une durée de fonctionnement du détecteur, d'au moins une même impulsion émise, reçue d'une part en direct de ladite source et reçue d'autre part par réflexion sur l'un des réflecteurs,
- mesure de la direction d'arrivée, de la date d'arrivée et d'au moins une caractéristique invariante de chaque impulsion reçue.

La localisation d'une source consiste à déterminer la direction et la distance de la source par rapport à un point de référence. Une telle localisation est généralement basée sur un principe de multistatisme consistant à observer la source sous différents angles.

Pour localiser une source, une méthode connue, utilisant le principe de la triangulation, consiste à mesurer la direction d'arrivée des impulsions émises par la source au moyens de plusieurs détecteurs, délocalisés les uns des autres. La triangulation est une technique permettant de déterminer la position d'un point en mesurant les angles entre ce point et d'autres points de référence dont la position est connue.

Toutefois, une telle méthode impose d'utiliser un réseau de détecteurs et donc nécessairement un système de coordination des détecteurs du réseau, ce qui outre le coût lié au nombre de détecteurs, exclut la possibilité de travailler avec un unique détecteur.

Il a également été développé une méthode de localisation consistant à disposer un unique détecteur sur un porteur ayant une vitesse de défilement relativement élevée par rapport à la source à localiser. Un tel défilement relatif permet d'obtenir un ensemble de directions d'arrivée dans le temps, dont le point de concours est l'endroit où se situe la source.

Cependant, l'obtention d'un défilement relatif impose un porteur particulièrement véloce par rapport aux sources à localiser, ce qui rend la méthode inadaptée dans le cas d'une source en déplacement.

Une autre méthode connue repose sur la mesure des différences de temps de passage de lobe d'antenne (abrégé en DTPLA).

Néanmoins, de telles mesures supposent de connaître la vitesse de rotation du lobe d'antenne et donc d'effectuer des balayages circulaires, ce qui implique une acquisition relativement lente.

Il est également connu d'utiliser la différence de temps d'arrivée (abrégé en TDOA) d'un même signal arrivant en deux points de réception différents pour localiser une source. Une telle différence de temps permet de déterminer le lieu géométrique où se situe la source.

Toutefois, là encore au moins deux détecteurs sont requis, ce qui exclut la possibilité de travailler avec un seul détecteur.

Des méthodes combinant des mesures de TDOA et de DTPLA à partir d'un unique détecteur sont également connues.

En revanche, comme cela a été expliqué précédemment, les mesures de DTPLA exigent des balayages circulaires, ce qui est à la fois lent et incertain.

Les documents US 2011/0140966 A, EP 2 428 810 A et US 2015/0323642 A décrivent des exemples de procédés de localisation de sources.

Il existe donc un besoin pour un procédé de localisation de sources à partir d'un unique détecteur quasi-statique par rapport aux sources à localiser.

A cet effet, l'invention a pour objet un procédé de localisation du type précité, dans lequel le procédé comprend, en outre, les étapes de :

- identification, parmi les impulsions reçues, des impulsions reçues en direct et des impulsions reçues en réflexion,
- regroupement par paire d'impulsions reçues en direct avec des impulsions reçues en réflexion, les impulsions de chaque paire ayant les mêmes caractéristiques invariantes et des directions d'arrivée différentes,
- calcul, pour chaque paire, de la différence entre la date d'arrivée de l'impulsion reçue par réflexion par rapport à la date d'arrivée de l'impulsion reçue en direct, et
- détermination de la distance de chaque source au détecteur à partir des différences de dates d'arrivée calculées et des directions d'arrivée des impulsions de chaque paire.

Suivant des modes de mise en œuvre particuliers, le procédé de localisation comprend une ou plusieurs des caractéristiques suivantes, prises isolément ou suivant toutes les combinaisons techniquement possibles :

- la durée de fonctionnement est formée de tranches de temps de durées identiques, le procédé comprenant la définition d'une durée glissante au moins égale à la durée d'une tranche de temps, les étapes d'identification et de regroupement étant mises en œuvre sur la durée glissante, les impulsions de chaque paire appartenant à une même tranche de temps.
- le procédé comprend, en outre, pour chaque tranche de temps, une étape de tri des impulsions reçues en fonction de la direction d'arrivée et des caractéristiques invariantes de chaque impulsion pour obtenir des sous-séries d'impulsions, les impulsions de chaque sous-série ayant des directions d'arrivée égales et des caractéristiques invariantes égales, les impulsions de chaque sous-série étant regroupées dans une même paire lors de l'étape de regroupement.
- l'étape de mesure comprend, en outre, la détermination, sur les sous-séries successives de chaque durée glissante de la puissance maximale parmi les puissances des impulsions des sous-séries ayant des directions d'arrivée égales, des caractéristiques invariantes égales et appartenant à une même durée glissante, les impulsions reçues en direct et les impulsions reçues en réflexion étant identifiées, pour chaque sous-série d'impulsions, par comparaison de la puissance maximale déterminée pour ladite sous-série par rapport à au moins deux seuils.
- les impulsions des sous-séries associées à ladite puissance maximale sont identifiées reçues en direct lorsque la puissance maximale est supérieure ou égale à un premier seuil et les impulsions des sous-séries associées à ladite puissance maximale sont identifiées reçues en réflexion lorsque la puissance maximale est strictement inférieure à un deuxième seuil, le deuxième seuil étant inférieur ou égal au premier seuil.
- l'étape de détermination comprend le rassemblement des paires sur des durées prédéterminées pour former des groupes de deux paires, de trois paires ou de quatre paires, le nombre de paires par groupe étant égal au nombre de directions d'arrivées différentes correspondant aux impulsions reçues sur la durée prédéterminée, la distance de chaque source au détecteur étant déterminée à partir des différences de dates d'arrivée calculées pour les paires de chaque groupe et des directions d'arrivée des impulsions des paires de chaque groupe,

  chaque groupe de deux paires comprenant :

  ◦ une première paire d'impulsions de caractéristiques invariantes égales à une première caractéristique invariante, de directions d'arrivée différentes, et
  ◦ une deuxième paire d'impulsions de caractéristiques invariantes égales à une deuxième caractéristique invariante et de mêmes directions d'arrivée différentes,

  chaque groupe de trois paires comprenant :

  ◦ une première paire d'impulsions de caractéristiques invariantes égales à une première caractéristique invariante, de directions d'arrivée égales respectivement à une première et à une deuxième direction d'arrivée différentes l'une de l'autre,
  ◦ une deuxième paire d'impulsions de caractéristiques invariantes égales à la première caractéristique invariante, de directions d'arrivée égales respectivement à la première et à une troisième direction d'arrivée, la troisième direction d'arrivée étant différente de la première et de la deuxième direction d'arrivée, et
  ◦ une troisième paire d'impulsions de caractéristiques invariantes égales à une deuxième caractéristique invariante différente de la première caractéristique invariante, de directions d'arrivée égales respectivement à la deuxième et à la troisième direction d'arrivée,

  chaque groupe de quatre paires comprenant :

  ◦ une première paire d'impulsions de caractéristiques invariantes égales à une première caractéristique invariante, de directions d'arrivée égales respectivement à une première et à une deuxième direction d'arrivée différentes l'une de l'autre,
  ◦ une deuxième paire d'impulsions de caractéristiques invariantes égales à la première caractéristique invariante de directions d'arrivée égales respectivement à la première et à une troisième direction d'arrivée, la troisième direction d'arrivée étant différente de la première et de la deuxième direction d'arrivée,
  ◦ une troisième paire d'impulsions de caractéristiques invariantes égales à une deuxième caractéristique invariante différente de la première caractéristique invariante, de directions d'arrivée égales respectivement à la troisième et à une quatrième direction d'arrivée, la quatrième direction d'arrivée étant différente de la première, de la deuxième et de la troisième direction d'arrivée, et
  ◦ une quatrième paire d'impulsions de caractéristiques invariantes égales à la deuxième caractéristique invariante, de directions d'arrivée égales respectivement à la troisième et à la quatrième direction d'arrivée.

- chaque groupe permet de déterminer les distances respectives de deux des sources à localiser au détecteur, lesdites distances étant calculées :

◦ pour chaque groupe de deux paires d'impulsions à partir des équations suivantes :

$$\begin{cases} d_1 = \dfrac{\Delta_{S_1/E_2}{}^2 + 2\Delta_{S_1/E_2}.d_2}{2\Delta_{S_1/E_2} + 2d_2\left(1 - \cos(\alpha_{E_2S_1})\right)} \\[4ex] d_2 = \dfrac{\Delta_{S_2/E_1}{}^2 + 2\Delta_{S_2/E_1}.d_1}{2\Delta_{S_2/E_1} + 2d_1\left(1 - \cos(\alpha_{E_1S_2})\right)} \end{cases}$$

◦ pour chaque groupe de trois paires d'impulsions à partir des équations suivantes :

$$\begin{cases} \dfrac{\Delta_{S_1/E_1}{}^2 + 2\Delta_{S_1/E_1}.d_1}{2\Delta_{S_1/E_1} + 2d_1\left(1 - \cos(\alpha_{E_1S_1})\right)} = \dfrac{\Delta_{S_1/E_2}{}^2 + 2\Delta_{S_1/E_2}.d_2}{2\Delta_{S_1/E_2} + 2d_2\left(1 - \cos(\alpha_{E_2S_1})\right)} \\[4ex] d_2 = \dfrac{\Delta_{S_2/E_1}{}^2 + 2\Delta_{S_2/E_1}.d_1}{2\Delta_{S_2/E_1} + 2d_1\left(1 - \cos(\alpha_{E_1S_2})\right)} \end{cases}$$

ou

$$\begin{cases} d_1 = \dfrac{\Delta_{S_1/E_2}{}^2 + 2\Delta_{S_1/E_2}.d_2}{2\Delta_{S_1/E_2} + 2d_2\left(1 - \cos(\alpha_{E_2S_1})\right)} \\[4ex] \dfrac{\Delta_{S_2/E_1}{}^2 + 2\Delta_{S_2/E_1}.d_1}{2\Delta_{S_2/E_1} + 2d_1\left(1 - \cos(\alpha_{E_1S_2})\right)} = \dfrac{\Delta_{S_2/E_2}{}^2 + 2\Delta_{S_2/E_2}.d_2}{2\Delta_{S_2/E_2} + 2d_2\left(1 - \cos(\alpha_{E_2S_2})\right)} \end{cases}$$

◦ pour chaque groupe de quatre paires d'impulsions à partir des équations suivantes :

$$\begin{cases} \dfrac{\Delta_{S_1/E_1}{}^2 + 2\Delta_{S_1/E_1}.d_1}{2\Delta_{S_1/E_1} + 2d_1\left(1 - \cos(\alpha_{E_1S_1})\right)} = \dfrac{\Delta_{S_1/E_2}{}^2 + 2\Delta_{S_1/E_2}.d_2}{2\Delta_{S_1/E_2} + 2d_2\left(1 - \cos(\alpha_{E_2S_1})\right)} \\[4ex] \dfrac{\Delta_{S_2/E_1}{}^2 + 2\Delta_{S_2/E_1}.d_1}{2\Delta_{S_2/E_1} + 2d_1\left(1 - \cos(\alpha_{E_1S_2})\right)} = \dfrac{\Delta_{S_2/E_2}{}^2 + 2\Delta_{S_2/E_2}.d_2}{2\Delta_{S_2/E_2} + 2d_2\left(1 - \cos(\alpha_{E_2S_2})\right)} \end{cases}$$

Où

- $\Delta_{S_1/E_1} = c.\,\tau_{S_1/E_1}$, $\Delta_{S_2/E_2} = c.\,\tau_{S_2/E_2}$, $\Delta_{S_1/E_2} = c.\,\tau_{S_1/E_2}$, $\Delta_{S_2/E_1} = c.\,\tau_{S_2/E_1}$,
- $d_1$ est la distance de la première source $E_1$ au détecteur,
- $d_2$ est la distance de la deuxième source $E_2$ au détecteur,
- c est la vitesse de propagation des ondes électromagnétiques,
- $\tau_{S_1/E_1}$ est la différence de date d'arrivée entre les impulsions reçues par réflexion sur un premier réflecteur par rapport aux impulsions reçues en direct de la première source,
- $\tau_{S_2/E_2}$ est la différence de date d'arrivée entre les impulsions reçues par réflexion sur un deuxième réflecteur par rapport aux impulsions reçues en direct de la deuxième source,
- $\tau_{S_1/E_2}$ est la différence de date d'arrivée entre les impulsions reçues par réflexion sur le premier réflecteur par rapport aux impulsions reçues en direct de la deuxième source,
- $\tau_{S_2/E_1}$ est la différence de date d'arrivée entre les impulsions reçues par réflexion sur le deuxième réflecteur par rapport aux impulsions reçues en direct de la première source,
- $\alpha_{E_2S_2}$ est l'écart angulaire entre la deuxième source et le deuxième réflecteur vu depuis le détecte,
- $\alpha_{E_1S_1}$ est l'écart angulaire entre la première source et le premier réflecteur vu depuis le détecteur,

- $\alpha_{E_2S_1}$ est l'écart angulaire entre la deuxième source et le premier réflecteur vu depuis le détecteur, et
- $a_{E_1S_2}$ est l'écart angulaire entre la deuxième source et le premier réflecteur vu depuis le détecteur.

- l'étape de détermination comprend le calcul d'un histogramme, pour chaque paire, à partir des différences de dates d'arrivée calculées pour ladite paire et la détermination d'un retard principal des impulsions reçues en réflexion par rapport aux impulsions reçues en direct à partir de l'histogramme calculé, les différences de date d'arrivée des équations précédentes étant égales respectivement à l'un des retards principaux déterminés.
- les caractéristiques invariantes de chaque impulsion comprennent au moins l'une des caractéristiques parmi : la largeur de l'impulsion, la fréquence porteuse de l'impulsion et la modulation intra-impulsion intentionnelle.

L'invention concerne aussi un détecteur de localisation d'au moins deux sources d'émission d'impulsions électromagnétiques dans un environnement, l'environnement comprenant au moins deux réflecteurs, le détecteur étant propre à mettre en œuvre les étapes du procédé tel que défini plus haut.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une vue schématique d'un exemple d'une source à localiser, d'un réflecteur et d'un détecteur configuré pour localiser la source,
- figure 2, une vue schématique d'un exemple d'une première configuration de deux sources à localiser et de deux réflecteurs, chaque source étant colocalisée avec un réflecteur,
- figure 3, une vue schématique d'un exemple d'une deuxième configuration de deux sources à localiser et de deux réflecteurs, l'une des sources étant colocalisée avec un réflecteur,
- figure 4, une vue schématique d'un autre exemple d'une deuxième configuration de deux sources à localiser et de deux réflecteurs,
- figure 5, une vue schématique d'un exemple d'une troisième configuration de deux sources à localiser et de deux réflecteurs, les sources n'étant pas colocalisées avec les réflecteurs,
- figure 6, une vue schématique et fonctionnelle du détecteur de la figure 1, et
- figure 7, un organigramme d'un exemple de mise en œuvre d'un procédé de localisation de sources.

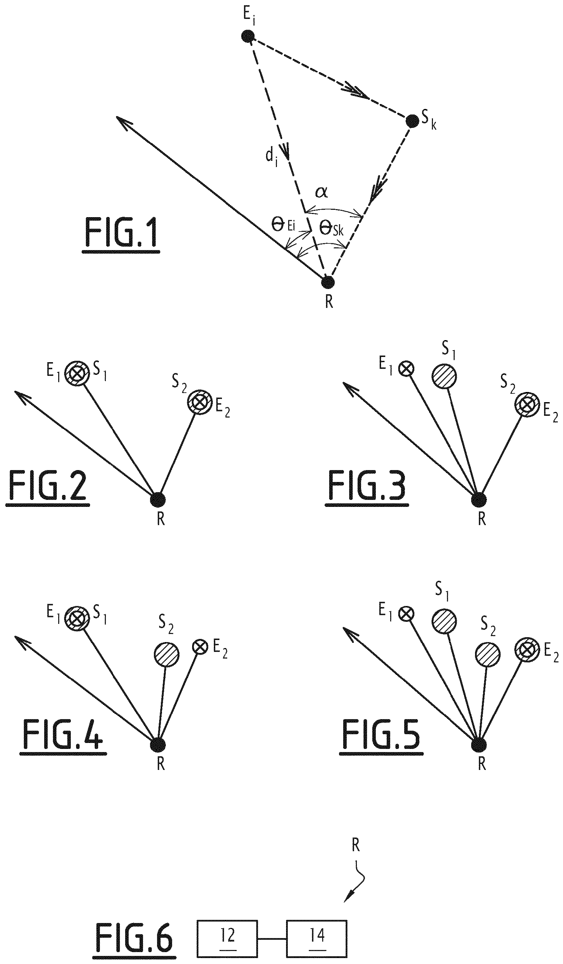

Un principe général de mise en œuvre de l'invention est décrit dans ce qui suit, sur la base de la figure 1.

La figure 1 illustre une source d'émission $E_i$, un réflecteur $S_k$ et un détecteur R, formant les trois points d'un triangle bistatique $E_iRS_k$. La distance $E_iR$ entre la source $E_i$ et le détecteur R est notée $d_i$ sur la figure 1 et dans la suite de la description.

Chaque source d'émission $E_i$ est, par exemple, une source d'émission radar, c'est-à-dire une source d'émissions électromagnétiques modulées, et plus particulièrement modulées par impulsions. Chaque source $E_i$ est, par exemple, disposée en mer sur des navires délocalisés les uns des autres.

Un but de l'invention est de localiser les sources $E_i$ au moyen d'un unique détecteur de radars R placé à distance des sources $E_i$, comme cela est illustré par la figure 1.

Le détecteur de radars R reçoit le signal $x_{E_i}$ correspondant à l'impulsion émise par la source $E_i$ en direct, c'est-à-dire après avoir parcouru le chemin $E_iR$. Ce signal est caractérisé par des caractéristiques $a_{E_i}$, une date d'arrivée $t_{E_i}$ et une direction d'arrivée $\theta_{E_i}$ mesurées par le détecteur R.

Le détecteur de radars R reçoit également le signal $x_{S_k/E_i}$ correspondant à la même impulsion émise par la source $E_i$ et réfléchie sur le réflecteur $S_k$, c'est-à-dire après avoir parcouru le chemin $E_iS_k + S_kR$. Ce signal est caractérisé par des caractéristiques $a_{S_k/E_i}$, une date d'arrivée $t_{S_k/E_i}$ et une direction d'arrivée $\theta_{S_k}$ mesurées par le détecteur R

Ainsi, pour la source $E_i$ et le réflecteur $S_k$, le détecteur R reçoit les deux signaux : $x_{E_i}$ ($a_{E_i}$, $\theta_{E_i}$, $t_{E_i}$) et $x_{S_k/E_i}$ ($a_{S_k/E_i}$, $t_{S_k/E_i}$, $\theta_{S_k}$).

Des signaux $x_{E_i}(a_{E_i},\theta_{E_i},t_{E_i})$ et $x_{S_k/E_i}(a_{S_k/E_i},t_{S_k/E_i},\theta_{S_k})$, le détecteur R déduit la différence de temps d'arrivée $\tau_{S_k/E_i}$ et la différence de directions d'arrivée $\alpha_{E_iS_k}$ entre l'impulsion reçue en direct et l'impulsion reçue en réfléchie à partir d'une même émission, soit donc : $\tau_{S_k/E_i} = t_{S_k/E_i} - t_{E_i}$ et $\alpha_{E_iS_k} = \theta_{E_i} - \theta_{S_k}$.

La différence de trajets $E_iS_k + S_kR - d_i = c.\tau_{S_k/E_i}$ est appelée la distance bistatique associée et est notée $\Delta_{S_k/E_i}$. Une telle expression permet d'obtenir l'expression suivante de la distance $E_iS_k$ entre la source $E_i$ et le réflecteur $S_k$ :

$$E_iS_k = \Delta_{S_k/E_i} + d_i - S_kR \qquad (1)$$

L'application du théorème du cosinus au triangle $E_iRS_k$ permet d'écrire l'équation suivante :

$$E_iS_k{}^2 = S_kR^2 + d_i{}^2 - 2d_i \cdot S_kR \cdot \cos\left(\alpha_{E_iS_k}\right) \qquad (2)$$

En éliminant le terme $E_iS_k$ des expressions (1) et (2), l'expression suivante de la distance $S_kR$ entre le réflecteur $S_k$ et le détecteur R est obtenue :

$$S_kR = \frac{\Delta_{S_k/E_i}{}^2 + 2\Delta_{S_k/E_i} \cdot d_i}{2\Delta_{S_k/E_i} + 2d_i\left(1 - \cos\left(\alpha_{E_iS_k}\right)\right)} \qquad (3)$$

Dans le cas de l'emploi d'un unique détecteur R, la résolution du problème de localisation à partir de mesures de direction d'arrivée et de temps d'arrivée, repose sur le fait que la zone étudiée comporte au minimum deux sources $E_i$ non colocalisées l'une avec l'autre, $E_1$ et $E_2$, et deux réflecteurs $S_k$ également non colocalisés l'un avec l'autre, $S_1$ et $S_2$. Une ou plusieurs colocalisations d'une source $E_i$ avec un réflecteur $S_k$ est par contre acceptable. Deux éléments sont considérés « colocalisés » lorsqu'ils sont confondus.

A partir de deux sources et de deux réflecteurs, il existe donc quatre configurations possibles. Ces configurations sont illustrées par les figures 2 à 5.

En particulier, la figure 2 illustre une première configuration dans laquelle les deux sources ne sont pas colocalisées et chaque source est colocalisée avec un réflecteur. La première configuration de la figure 2 comprend deux triangles bistatiques non dégénérés $E_1RS_2$ et $E_2RS_1$ et deux triangles bistatiques dégénérés $E_1RS_1$ et $E_2RS_2$. Un triangle est dit dégénéré lorsqu'il se résume à un segment.

Les figures 3 et 4 illustrent chacune une deuxième configuration dans laquelle les deux sources ne sont pas colocalisées entre elles et une seule source est colocalisée avec un réflecteur. La deuxième configuration de la figure 3 comprend trois triangles bistatiques non dégénérés $E_1RS_1$, $E_1RS_2$ et $E_2RS_1$ et un triangle bistatique dégénéré $E_2RS_2$. La deuxième configuration de la figure 4 comprend trois triangles bistatiques non dégénérés $E_2RS_2$, $E_1RS_2$ et $E_2RS_1$ et un triangle bistatique dégénéré $E_1RS_1$.

La figure 5 illustre une troisième configuration dans laquelle les sources et les réflecteurs ne sont pas colocalisés entre eux. La troisième configuration de la figure 5 comprend quatre triangles bistatiques non dégénérés $E_1RS_1$, $E_2RS_2$, $E_1RS_2$ et $E_2RS_1$.

L'application de la relation (3) à chaque triangle bistatique possible fournit quatre expressions :

$$\text{Triangle } E_1RS_1 \quad \Rightarrow \quad S_1R = \frac{\Delta_{S_1/E_1}{}^2 + 2\Delta_{S_1/E_1} \cdot d_1}{2\Delta_{S_1/E_1} + 2d_1\left(1 - \cos\left(\alpha_{E_1S_1}\right)\right)} \qquad (4.1)$$

$$\text{Triangle } E_1RS_2 \quad \Rightarrow \quad S_2R = \frac{\Delta_{S_2/E_1}{}^2 + 2\Delta_{S_2/E_1} \cdot d_1}{2\Delta_{S_2/E_1} + 2d_1\left(1 - \cos\left(\alpha_{E_1S_2}\right)\right)} \qquad (4.2)$$

$$\text{Triangle } E_2RS_1 \quad \Rightarrow \quad S_1R = \frac{\Delta_{S_1/E_2}{}^2 + 2\Delta_{S_1/E_2} \cdot d_2}{2\Delta_{S_1/E_2} + 2d_2\left(1 - \cos\left(\alpha_{E_2S_1}\right)\right)} \qquad (4.3)$$

$$\text{Triangle } E_2RS_2 \quad \Rightarrow \quad S_2R = \frac{\Delta_{S_2/E_2}{}^2 + 2\Delta_{S_2/E_2} \cdot d_2}{2\Delta_{S_2/E_2} + 2d_2\left(1 - \cos\left(\alpha_{E_2S_2}\right)\right)} \qquad (4.4)$$

Les expressions (4.1) à (4.4) n'ont de sens complet que pour la troisième configuration. En effet, les expressions relatives aux triangles bistatiques dégénérés n'ont pas de sens en raison des valeurs nulles correspondant aux mesures de la distance bistatique $\Delta_{S_k/E_i}$ et de la différence d'angle d'arrivée entre la source et le réflecteur $\alpha_{E_iS_k}$.

Dans le cas de la troisième configuration, l'égalité des expressions (4.1) et (4.3) et celle des expressions (4.2) et (4.4), permet d'obtenir les équations suivantes :

$$S_1R = \frac{\Delta_{S_1/E_1}{}^2 + 2\Delta_{S_1/E_1}.d_1}{2\Delta_{S_1/E_1} + 2d_1\left(1 - \cos\left(\alpha_{E_1 S_1}\right)\right)} = \frac{\Delta_{S_1/E_2}{}^2 + 2\Delta_{S_1/E_2}.d_2}{2\Delta_{S_1/E_2} + 2d_2\left(1 - \cos\left(\alpha_{E_2 S_1}\right)\right)} \qquad (5.1)$$

et

$$S_2R = \frac{\Delta_{S_2/E_1}{}^2 + 2\Delta_{S_2/E_1}.d_1}{2\Delta_{S_2/E_1} + 2d_1\left(1 - \cos\left(\alpha_{E_1 S_2}\right)\right)} = \frac{\Delta_{S_2/E_2}{}^2 + 2\Delta_{S_2/E_2}.d_2}{2\Delta_{S_2/E_2} + 2d_2\left(1 - \cos\left(\alpha_{E_2 S_2}\right)\right)} \qquad (5.2)$$

Où

- $\Delta_{S_1/E_1} = c.\tau_{S_1/E_1}$, $\Delta_{S_2/E_2} = c.\tau_{S_2/E_2}$, $\Delta_{S_1/E_2} = c.\tau_{S_1/E_2}$, $\Delta_{S_2/E_1} = c.\tau_{S_2/E_1}$,
- $d_1$ est la distance de la première source $E_1$ au détecteur R,
- $d_2$ est la distance de la deuxième source $E_2$ au détecteur R,
- c est la vitesse de propagation des ondes électromagnétiques,
- $\tau_{S_1/E_1}$ est la différence de date d'arrivée entre les impulsions reçues par réflexion sur un premier réflecteur par rapport aux impulsions reçues en direct de la première source,
- $\tau_{S_2/E_2}$ est la différence de date d'arrivée entre les impulsions reçues par réflexion sur un deuxième réflecteur par rapport aux impulsions reçues en direct de la deuxième source,
- $\tau_{S_1/E_2}$ est la différence de date d'arrivée entre les impulsions reçues par réflexion sur le premier réflecteur par rapport aux impulsions reçues en direct de la deuxième source,
- $\tau_{S_2/E_1}$ est la différence de date d'arrivée entre les impulsions reçues par réflexion sur le deuxième réflecteur par rapport aux impulsions reçues en direct de la première source,
- $\alpha_{E_2 S_2}$ est l'écart angulaire entre la deuxième source et le deuxième réflecteur vu depuis le détecteur,
- $\alpha_{E_1 S_1}$ est l'écart angulaire entre la première source et le premier réflecteur vu depuis le détecteur,
- $\alpha_{E_2 S_1}$ est l'écart angulaire entre la deuxième source et le premier réflecteur vu depuis le détecteur, et
- $\alpha_{E_1 S_2}$ est l'écart angulaire entre la deuxième source et le premier réflecteur vu depuis le détecteur.

Les expressions (5.1) et (5.2) permettent d'obtenir un système de deux équations du type suivant :

$$\begin{cases} b_{11} + b_{12}.d_1 + b_{13}.d_2 + b_{14}.d_1.d_2 = 0 \\ b_{21} + b_{22}.d_1 + b_{23}.d_2 + b_{24}.d_1.d_2 = 0 \end{cases} \qquad (6)$$

Dans le cas de la deuxième configuration de la figure 3, l'expression (5.1) précédente est toujours valable, mais pas l'expression (5.2) car l'expression (4.4) n'a pas de sens. Toutefois, on peut remarquer que l'expression (4.2) est alors celle de $d_2$, ce qui permet d'écrire :

$$d_2 = S_2R = \frac{\Delta_{S_2/E_1}{}^2 + 2\Delta_{S_2/E_1}.d_1}{2\Delta_{S_2/E_1} + 2d_1\left(1 - \cos\left(\alpha_{E_1 S_2}\right)\right)} \qquad (7)$$

Les expressions (5.1) et (7) permettent alors de retrouver le système d'équations (6).
Par symétrie, la deuxième configuration de la figure 4 aboutit au même système d'équations (6).
Dans le cas de la première configuration, les expressions (5.1) et (5.2) ne sont pas valables car les expressions (4.1) et (4.4) n'ont pas de sens. Toutefois, on peut remarquer que l'expression (7) est applicable et que l'expression (4.3) est alors celle de $d_1$, ce qui permet d'écrire :

$$d_1 = S_1R = \frac{\Delta_{S_1/E_2}{}^2 + 2\Delta_{S_1/E_2}.d_2}{2\Delta_{S_1/E_2} + 2d_2\left(1 - \cos\left(\alpha_{E_2 S_1}\right)\right)} \qquad (8)$$

Les expressions (7) et (8) permettent alors de retrouver le système d'équations (6).
Un unique système d'équations (6) permet donc d'extraire les inconnues $d_1$ et $d_2$, seuls les coefficients $b_{ij}$ étant différents d'une configuration à l'autre.
Un traitement unique de résolution du système d'équations (6) est donc mis en œuvre par le détecteur R avec des coefficients $b_{ij}$ dépendant des configurations trouvées à la détection.

Les coefficients du système (6) sont exprimés ci-après en fonction des différentes configurations :

- Pour la première configuration illustrée en figure 2 :

$$\begin{cases} b_{11} &= \Delta_{S_1/E_2}{}^2 \\ b_{12} &= -2\Delta_{S_1/E_2} \\ b_{13} &= 2\Delta_{S_1/E_2} \\ b_{14} &= -2\left(1 - \cos(\alpha_{E_2 S_1})\right) \end{cases} \tag{9.1}$$

et

$$\begin{cases} b_{21} &= -\Delta_{S_2/E_1}{}^2 \\ b_{22} &= -2\Delta_{S_2/E_1} \\ b_{23} &= 2\Delta_{S_2/E_1} \\ b_{24} &= 2\left(1 - \cos(\alpha_{E_1 S_2})\right) \end{cases} \tag{9.2}$$

- Pour la deuxième configuration illustrée en figure 3 :

$$\begin{cases} b_{11} &= 2\,\Delta_{S_1/E_1}.\Delta_{S_1/E_2}\left(\Delta_{S_1/E_1} - \Delta_{S_1/E_2}\right) \\ b_{12} &= 2\,\Delta_{S_1/E_2}\left(2\Delta_{S_1/E_1} - \Delta_{S_1/E_2}\left(1 - \cos(\alpha_{E_1 S_1})\right)\right) \\ b_{13} &= 2\,\Delta_{S_1/E_1}\left(-2\Delta_{S_1/E_2} + \Delta_{S_1/E_1}\left(1 - \cos(\alpha_{E_2 S_1})\right)\right) \\ b_{14} &= 4\,\Delta_{S_1/E_1}\left(1 - \cos(\alpha_{E_2 S_1})\right) - 4\Delta_{S_1/E_2}\left(1 - \cos(\alpha_{E_1 S_1})\right) \end{cases} \tag{9.3}$$

et

$$\begin{cases} b_{21} &= -\Delta_{S_2/E_1}{}^2 \\ b_{22} &= -2\Delta_{S_2/E_1} \\ b_{23} &= 2\Delta_{S_2/E_1} \\ b_{24} &= 2\left(1 - \cos(\alpha_{E_1 S_2})\right) \end{cases} \tag{9.2}$$

- Pour la deuxième configuration illustrée en figure 4 :

$$\begin{cases} b_{11} &= \Delta_{S_1/E_2}{}^2 \\ b_{12} &= -2\Delta_{S_1/E_2} \\ b_{13} &= 2\Delta_{S_1/E_2} \\ b_{14} &= -2\left(1 - \cos(\alpha_{E_2 S_1})\right) \end{cases} \tag{9.1}$$

et

$$\begin{cases} b_{21} = 2\,\Delta_{S_2/E_1}\,\Delta_{S_2/E_2}\big(\Delta_{S_2/E_1} - \Delta_{S_2/E_2}\big) \\ b_{22} = 2\,\Delta_{S_2/E_2}\Big(2\Delta_{S_2/E_1} - \Delta_{S_2/E_2}\big(1-\cos(\alpha_{E_1S_2})\big)\Big) \\ b_{23} = 2\,\Delta_{S_2/E_1}\Big(-2\Delta_{S_2/E_2} + \Delta_{S_2/E_1}\big(1-\cos(\alpha_{E_2S_2})\big)\Big) \\ b_{24} = 4\,\Delta_{S_2/E_1}\big(1-\cos(\alpha_{E_2S_2})\big) - 4\Delta_{S_2/E_2}\big(1-\cos(\alpha_{E_1S_2})\big) \end{cases} \quad (9.4)$$

- Pour la troisième configuration illustrée en figure 5 :

$$\begin{cases} b_{11} = 2\,\Delta_{S_1/E_1}\cdot\Delta_{S_1/E_2}\big(\Delta_{S_1/E_1} - \Delta_{S_1/E_2}\big) \\ b_{12} = 2\,\Delta_{S_1/E_2}\Big(2\Delta_{S_1/E_1} - \Delta_{S_1/E_2}\big(1-\cos(\alpha_{E_1S_1})\big)\Big) \\ b_{13} = 2\,\Delta_{S_1/E_1}\Big(-2\Delta_{S_1/E_2} + \Delta_{S_1/E_1}\big(1-\cos(\alpha_{E_2S_1})\big)\Big) \\ b_{14} = 4\,\Delta_{S_1/E_1}\big(1-\cos(\alpha_{E_2S_1})\big) - 4\Delta_{S_1/E_2}\big(1-\cos(\alpha_{E_1S_1})\big) \end{cases} \quad (9.3)$$

et

$$\begin{cases} b_{21} = 2\,\Delta_{S_2/E_1}\cdot\Delta_{S_2/E_2}\big(\Delta_{S_2/E_1} - \Delta_{S_2/E_2}\big) \\ b_{22} = 2\,\Delta_{S_2/E_2}\Big(2\Delta_{S_2/E_1} - \Delta_{S_2/E_2}\big(1-\cos(\alpha_{E_1S_2})\big)\Big) \\ b_{23} = 2\,\Delta_{S_2/E_1}\Big(-2\Delta_{S_2/E_2} + \Delta_{S_2/E_1}\big(1-\cos(\alpha_{E_2S_2})\big)\Big) \\ b_{24} = 4\,\Delta_{S_2/E_1}\big(1-\cos(\alpha_{E_2S_2})\big) - 4\Delta_{S_2/E_2}\big(1-\cos(\alpha_{E_1S_2})\big) \end{cases} \quad (9.4)$$

De la première équation du système (6), on peut exprimer, par exemple, $d_1$ en fonction de $d_2$ :

$$d_1 = -\frac{b_{11}+b_{13}.d_2}{b_{12}+b_{14}.d_2} \quad (10)$$

L'expression (10) introduite dans la seconde équation du système (6) aboutit à une équation du second degré en $d_2$, résolue par le détecteur R :

$$A\cdot d_2{}^2 + B\cdot d_2 + C = 0 \quad (11)$$

Où:

- $A = b_{13}.b_{24} - b_{14}.b_{23}$,
- $B = b_{11}.b_{24} - b_{12}.b_{23} + b_{13}.b_{22} - b_{14}.b_{21}$, et
- $C = b_{11}.b_{22} - b_{12}.b_{21}$.

La solution de l'équation (11) est l'unique racine positive, soit :

$$d_2 = \frac{-B\pm\sqrt{B^2-4AC}}{2A} > 0 \quad (12)$$

La distance $d_1$ de la première source au détecteur R est calculée par le détecteur R à partir de l'expression (10) et de la valeur de $d_2$ précédemment trouvée.

Les relations (4.2) et (4.3) permettent de calculer les distances de chaque réflecteur au détecteur $S_1R$ et $S_2R$ à partir des valeurs mesurées de $\Delta_{S_k/E_i}$ et $\alpha_{E_iS_k}$, et des valeurs calculées de $d_1$ et $d_2$.

Ainsi, les sources $E_1,E_2$ et les réflecteurs $S_1$ et $S_2$ ont bien été localisés en coordonnées polaires, respectivement $(d_1, \theta_{E_1})$, $(d_2, \theta_{E_2})$, $(S_1R, \theta_{S_1})$ et $(S_2R, \theta_{S_2})$.

Le détecteur R de localisation de sources $E_i$ d'émission d'impulsions électromagnétiques, fonctionnant sur le principe décrit précédemment, est illustré de manière fonctionnelle par la figure 6.

Le détecteur R est un détecteur de radars.

Le détecteur R est quasi-statique par rapport aux sources $E_i$ à localiser, c'est-à-dire que le détecteur R a au plus une vitesse relativement faible par rapport aux sources $E_i$ à localiser, de sorte que les évolutions géométriques relatives aux triangles bistatiques $E_1RS_1$, $E_2RS_2$, $E_1RS_2$ et $E_2RS_1$ soient suffisamment inférieures à la précision recherchée pour ne pas l'affecter.

Le détecteur R comprend un module de réception 12 et un calculateur 14.

Le module de réception 12 comprend un réseau d'antennes de goniométrie formant un unique détecteur considéré comme ponctuel, un ensemble de chaînes de réception associées au réseau d'antennes et des fonctions de traitement permettant de mesurer des caractéristiques des impulsions reçues.

Les caractéristiques des impulsions mesurées par le module de réception 12 sont, par exemple, la direction d'arrivée des impulsions, la fréquence porteuse des impulsions, la largeur des impulsions, la date d'arrivée des impulsions, la modulation intra-impulsion intentionnelle (en anglais *intentional modulation on pulse*) ou encore la puissance des impulsions.

Le calculateur 14 est en interaction avec le module de réception 12.

Le calculateur 14 comprend, par exemple, un processeur, une mémoire et une unité de traitement de données. L'unité de traitement de données est configurée pour mettre en œuvre en interaction avec un produit programme d'ordinateur, chargeable dans l'unité de traitement de données, un procédé de localisation qui sera décrit plus en détails dans la suite de la description.

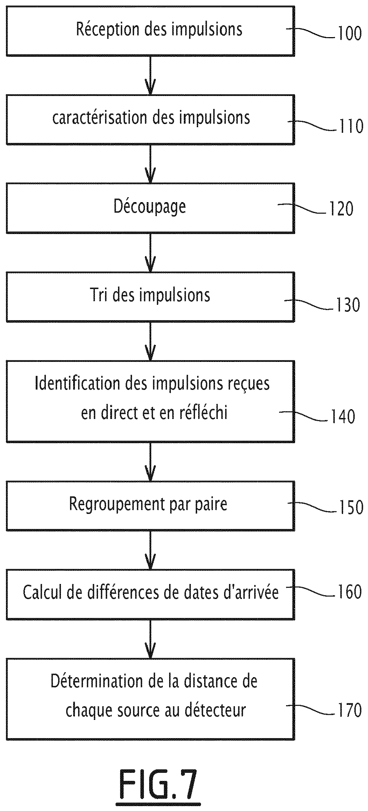

Un exemple de fonctionnement du détecteur R est maintenant décrit en référence à la figure 7, qui illustre schématiquement un ordinogramme de mise en œuvre d'un procédé de localisation de sources $E_1,...,$ $E_n$ d'émission d'impulsions électromagnétiques.

Dans la suite de la description, le terme « égal » désigne « égal à une tolérance près ». La tolérance choisie est liée aux précisions de mesure, au rapport signal-à-bruit de mesure et à la fréquence des signaux reçus sur le détecteur R. La tolérance choisie est, par exemple, $\pm$ 5 pourcents (%).

Pour chaque source $E_i$ à localiser, le procédé de détermination comprend initialement une étape 100 de réception par le détecteur R d'au moins une impulsion émise, d'une part reçue en direct, c'est-à-dire selon le trajet allant directement de la source $E_i$ au détecteur R, et d'autre part reçue sous sa forme réfléchie, c'est-à-dire après réflexion sur un réflecteur $S_k$. Seules la différence de trajets géométriques, qui entraîne des dates d'arrivée différentes, et la qualité de la réflexion permet de différencier l'impulsion reçue en direct de l'impulsion reçue en réfléchie lorsque ces impulsions reçues sont issues de la même émission.

Les impulsions sont reçues par le détecteur R pendant la durée de fonctionnement du détecteur R.

Ensuite, le procédé de localisation comprend une étape 110 de mesure, par le détecteur R, de la direction d'arrivée $\theta_k$, de la date d'arrivée t sur le détecteur R et d'au moins une caractéristique invariante $CTI_j$ de chaque impulsion reçue.

Dans le mode de réalisation illustré sur la figure 7, l'étape de mesure 110 comprend également la mesure de la puissance p de chaque impulsion reçue.

Les caractéristiques invariantes $CTI_j$ de chaque impulsion comprennent au moins l'une des caractéristiques parmi : la largeur de l'impulsion, la fréquence porteuse de l'impulsion et la modulation intra-impulsion intentionnelle.

Le procédé de localisation comprend une étape 120 de découpage de la durée de fonctionnement en tranches de temps $\Delta t_l$ de même durée. Le procédé comprend également la définition d'une durée glissante $\Delta T$ au moins égale à la durée d'une tranche de temps $\Delta t_l$.

La durée de chaque tranche de temps $\Delta t_l$ est liée à la durée maximale d'illumination à 3dB des radars. Par exemple, la durée de chaque tranche de temps est comprise entre 10 millisecondes (ms) et 100 ms.

Le procédé de localisation comprend, avantageusement, pour chaque tranche de temps $\Delta t_l$, une étape 130 de tri des impulsions reçues pendant la tranche de temps $\Delta t_l$, en fonction de la direction d'arrivée $\theta_k$ et d'au moins une caractéristique invariante $CTI_j$ choisie parmi la ou les caractéristiques invariantes mesurées de chaque impulsion. A l'issue de l'étape 130 de tri, des sous-séries d'impulsions $\{I(CTI_j, p, \theta_k, t,...)\}_{\Delta t1}$ sont obtenues.

Les impulsions de chaque sous-série $\{I(CTI_j, p, \theta_k, t,...)\}_{\Delta t1}$ ont des directions d'arrivée $\theta_k$ égales, des caractéristiques invariantes $CTI_j$ égales et appartiennent à la même tranche de temps $\Delta t_l$. De ce fait, chaque sous-série est caractérisée par une tranche de temps $\Delta t_l$, une direction d'arrivée $\theta_k$ et au moins une caractéristique invariante $CTI_j$.

Le procédé comprend une étape 140 d'identification, parmi les impulsions reçues, des impulsions reçues en direct et des impulsions reçues en réflexion.

Dans le mode de réalisation de la figure 7, l'étape d'identification 140 comprend une phase de création d'ensembles $\left\{\left\{I\left(CTI_{j_x}, p, \Theta_{k_y}, t, \ldots\right)\right\}_{\Delta t_{|z1}}, \left\{I\left(CTI_{j_x}, p, \Theta_{k_y}, t, \ldots\right)\right\}_{\Delta t_{|z2}}, \ldots\right\}_{\Delta T}$ de sous-séries. Les sous-séries de chaque ensemble $\left\{\left\{I\left(CTI_{j_x}, p, \Theta_{k_y}, t, \ldots\right)\right\}_{\Delta t_{|z1}}, \left\{I\left(CTI_{j_x}, p, \Theta_{k_y}, t, \ldots\right)\right\}_{\Delta t_{|z2}}, \ldots\right\}_{\Delta T}$ sont prises sur une même durée glissante $\Delta T$, ont des directions d'arrivée $\theta_k$ égales et des caractéristiques invariantes $CTI_j$ égales.

L'étape d'identification 140 comprend également, pour chaque ensemble $\left\{\left\{I\left(CTI_{j_x}, p, \Theta_{k_y}, t, \ldots\right)\right\}_{\Delta t_{|z1}}, \left\{I\left(CTI_{j_x}, p, \Theta_{k_y}, t, \ldots\right)\right\}_{\Delta t_{|z2}}, \ldots\right\}_{\Delta T}$ de sous-séries, une phase de détermination de la puissance maximale parmi les puissances des impulsions de l'ensemble considéré.

L'étape d'identification 140 comprend en outre, pour chaque ensemble $\left\{\left\{I\left(CTI_{j_x}, p, \Theta_{k_y}, t, \ldots\right)\right\}_{\Delta t_{|z1}}, \left\{I\left(CTI_{j_x}, p, \Theta_{k_y}, t, \ldots\right)\right\}_{\Delta t_{|z2}}, \ldots\right\}_{\Delta T}$, une phase d'identification des impulsions reçues en direct et des impulsions reçues en réflexion.

L'étape d'identification 140 est, par exemple, mise en œuvre par comparaison de la puissance maximale déterminée par rapport à deux seuils.

Dans ce cas, lorsque la puissance maximale déterminée pour l'ensemble $\left\{\left\{I\left(CTI_{j_x}, p, \Theta_{k_y}, t, \ldots\right)\right\}_{\Delta t_{|z1}}, \left\{I\left(CTI_{j_x}, p, \Theta_{k_y}, t, \ldots\right)\right\}_{\Delta t_{|z2}}, \ldots\right\}_{\Delta T}$ considéré est supérieure ou égale à un premier seuil, les impulsions des sous-séries de l'ensemble sont identifiées reçues en direct. Les sous-séries de l'ensemble correspondant sont alors appelées sous-séries directes et notées $\{I(CTI_j, p, \theta_k, t, \ldots)\}_{\Delta t_{|,E}}$. Le premier seuil est, par exemple, choisi en fonction de la puissance rayonnée des sources $E_i$. La puissance rayonnée d'une source (abrégée en PIRE) est le produit de la puissance injectée dans la ou les antennes de la source par le gain de la ou desdites antennes de la source.

Lorsque la puissance maximale déterminée pour l'ensemble $\left\{\left\{I\left(CTI_{j_x}, p, \theta_{k_y}, t, \ldots\right)\right\}_{\Delta t_{|z1}}, \left\{I\left(CTI_{j_x}, p, \theta_{k_y}, t, \ldots\right)\right\}_{\Delta t_{|z2}}, \ldots\right\}_{\Delta T}$ considéré est strictement inférieure à un deuxième seuil, les impulsions des sous-séries de l'ensemble sont identifiées reçues en réflexion. Les sous-séries de l'ensemble correspondants sont alors appelées sous-séries réfléchies et notées $\{I(CTI_j, p, \theta_k, t, \ldots)\}_{\Delta t_{|,S}}$. Le deuxième seuil est inférieur ou égal au premier seuil. Le deuxième seuil est, par exemple, choisi en fonction de la puissance rayonnée des sources $E_i$ et des surfaces équivalentes radars des réflecteur $S_k$.

Le procédé comprend, en outre, une étape 150 de regroupement par paire de sous-séries directes $\{I(CTI_j, p, \theta_k, t, \ldots)\}_{\Delta t_{|,E}}$ avec des sous-séries réfléchies $\{I(CTI_j, p, \theta_k, t, \ldots)\}_{\Delta t_{|,S}}$ ayant les mêmes caractéristiques invariantes $CTI_j$ et des directions d'arrivée $\theta_k$ différentes.

L'étape de regroupement 150 comprend une phase de formation, à partir des ensembles $\left\{\left\{I\left(CTI_{j_x}, p, \Theta_{k_y}, t, \ldots\right)\right\}_{\Delta t_{|z1}}, \left\{I\left(CTI_{j_x}, p, \Theta_{k_y}, t, \ldots\right)\right\}_{\Delta t_{|z2}}, \ldots\right\}_{\Delta T}$ précédemment formés, d'ensemble étendus de mêmes caractéristiques invariantes $CTI_j$ et de directions d'arrivée $\theta_k$ différentes, comprenant au moins un émetteur et un réflecteur, soit ces ensembles étendus:

$$\left\{\left\{I\left(CTI_{j_x}, p, \Theta_{k_{y1}}, t, \ldots\right)\right\}_{\Delta t_{|z11},E}, \left\{I\left(CTI_{j_x}, p, \Theta_{k_{y1}}, t, \ldots\right)\right\}_{\Delta t_{|z21},S}, \ldots\right\}_{\Delta T},$$

$$\left\{\left\{I\left(CTI_{j_x}, p, \Theta_{k_{y2}}, t, \ldots\right)\right\}_{\Delta t_{|z12},E}, \left\{I\left(CTI_{j_x}, p, \Theta_{k_{y2}}, t, \ldots\right)\right\}_{\Delta t_{|z22},S}, \ldots\right\}_{\Delta T},$$

L'étape de regroupement 150 comprend, également, une phase de regroupement par paires des sous-séries directes avec des sous-séries réfléchies. Les impulsions de chaque paire ont les mêmes caractéristiques invariantes $CTI_j$, des directions d'arrivée différentes et appartiennent à une même tranche de temps $\Delta t_l$.

L'étape de regroupement 150 comprend, également, une phase de rassemblement des paires de chaque ensemble étendu pour former des groupes de deux paires, de trois paires ou de quatre paires distinctes. Le nombre de paires par groupe est égal au nombre de directions d'arrivée différentes des impulsions de l'ensemble étendu correspondant.

Chaque groupe regroupe les impulsions correspondant à l'une des quatre configurations géométriques des figures 2 à 5.

En particulier, pour la première configuration correspondant à la figure 2, les impulsions proviennent de deux directions d'arrivée distinctes, par conséquent des groupes de deux paires distinctes de sous-séries sont formés. Chaque groupe de deux paires comprend :

- ∘ une première paire de sous-séries $\left\{I\left(CTI_{j_{x1}}, \Theta_{k_{y1}}, t, \ldots\right)\right\}_{\Delta t_{l_{z1}}, E} \cup \left\{I\left(CTI_{j_{x1}}, \Theta_{k_{y2}}, t, \ldots\right)\right\}_{\Delta t_{l_{z1}}, S}$ dont les impulsions ont des caractéristiques invariantes égales à une première caractéristique invariante $(CTI_{j_{x1}})$ et des directions d'arrivée $(\Theta_{k_{y1}}, \Theta_{k_{y2}})$ différentes, et

- ∘ une deuxième paire de sous-séries $\left\{I\left(CTI_{j_{x2}}, \Theta_{k_{y1}}, t, \ldots\right)\right\}_{\Delta t_{l_{z2}}, S} \cup \left\{I\left(CTI_{j_{x2}}, \Theta_{k_{y2}}, t, \ldots\right)\right\}_{\Delta t_{l_{z2}}, E}$ dont les impulsions ont des caractéristiques invariantes égales à une deuxième caractéristique invariante $(CTI_{j_{x2}})$ et ont les mêmes directions d'arrivée $(\Theta_{k_{y1}}, \Theta_{k_{y2}})$ différentes.

Pour la deuxième configuration correspondant aux figures 3 et 4, les impulsions proviennent de trois directions d'arrivée distinctes, par conséquent des groupes de trois paires distinctes de sous-séries sont formés. Chaque groupe de trois paires comprend :

- ∘ une première paire de sous-séries $\left\{I\left(CTI_{j_{x1}}, \Theta_{k_{y1}}, t, \ldots\right)\right\}_{\Delta t_{l_{z1}}, E} \cup \left\{I\left(CTI_{j_{x1}}, \Theta_{k_{y3}}, t, \ldots\right)\right\}_{\Delta t_{l_{z1}}, S}$, dont les impulsions ont des caractéristiques invariantes égales à une première caractéristique invariante $(CTI_{j_{x1}})$ et de directions d'arrivée égales respectivement à une première et à une deuxième direction d'arrivée $(\Theta_{k_{y1}}, \Theta_{k_{y2}})$ différentes l'une de l'autre,

- ∘ une deuxième paire de sous-séries $\left\{I\left(CTI_{j_{x1}}, \Theta_{k_{y1}}, t, \ldots\right)\right\}_{\Delta t_{l_{z2}}, E} \cup \left\{I\left(CTI_{j_{x1}}, \Theta_{k_{y2}}, t, \ldots\right)\right\}_{\Delta t_{l_{z2}}, S}$ dont les impulsions ont des caractéristiques invariantes égales à la première caractéristique invariante $(CTI_{j_{x1}})$ et des directions d'arrivée égales respectivement à la première et à une troisième direction d'arrivée $(\Theta_{k_{y1}}, \Theta_{k_{y3}})$, la troisième direction d'arrivée étant différente de la première et de la deuxième direction d'arrivée, et

- ∘ une troisième paire de sous-séries $\left\{I\left(CTI_{j_{x2}}, \Theta_{k_{y2}}, t, \ldots\right)\right\}_{\Delta t_{l_{z3}}, E} \cup \left\{I\left(CTI_{j_{x2}}, \Theta_{k_{y3}}, t, \ldots\right)\right\}_{\Delta t_{l_{z3}}, S}$ dont les impulsions ont des caractéristiques invariantes égales à une deuxième caractéristique invariante $(CTI_{j_{x2}})$ différente de la première caractéristique invariante et de directions d'arrivée égales respectivement à la deuxième et à la troisième direction d'arrivée $(\Theta_{k_{y2}}, \Theta_{k_{y3}})$.

Pour la troisième configuration correspondant à la figure 5, les impulsions proviennent de quatre directions d'arrivée distinctes, par conséquent des groupes de quatre paires distinctes de sous-séries sont formés. Chaque groupe de quatre paires comprend :

- ∘ une première paire de sous-séries $\left\{I\left(CTI_{j_{x1}}, \Theta_{k_{y1}}, t, \ldots\right)\right\}_{\Delta t_{l_{z1}}, E} \cup \left\{I\left(CTI_{j_{x1}}, \Theta_{k_{y3}}, t, \ldots\right)\right\}_{\Delta t_{l_{z1}}, S}$ dont les impulsions ont des caractéristiques invariantes égales à une première caractéristique invariante $(CTI_{j_{x1}})$ et de directions d'arrivée égales respectivement à une première et à une deuxième direction d'arrivée $(\Theta_{k_{y1}}, \Theta_{k_{y3}})$ différentes l'une de l'autre,

- ∘ une deuxième paire de sous-séries $\left\{I\left(CTI_{j_{x1}}, \Theta_{k_{y1}}, t, \ldots\right)\right\}_{\Delta t_{l_{z2}}, E} \cup \left\{I\left(CTI_{j_{x1}}, \Theta_{k_{y4}}, t, \ldots\right)\right\}_{\Delta t_{l_{z2}}, S}$ dont les impulsions ont des caractéristiques invariantes égales à la première caractéristique invariante $(CTI_{j_{x1}})$ et des directions

d'arrivée égales respectivement à la première et à une troisième direction d'arrivée $(\Theta_{k_{y1}}, \Theta_{k_{y4}})$, la troisième direction d'arrivée étant différente de la première et de la deuxième direction d'arrivée,

∘ une troisième paire de sous-séries $\left\{ I\left(CTI_{j_{x2}}, \Theta_{k_{y2}}, t, ... \right) \right\}_{\Delta t_{I_{z3}}, E} \cup \left\{ I\left(CTI_{j_{x2}}, \Theta_{k_{y3}}, t, ... \right) \right\}_{\Delta t_{I_{z3}}, S}$ dont les impulsions ont des caractéristiques invariantes égales à une deuxième caractéristique invariante $(CTI_{j_{x2}})$ différente de la première caractéristique invariante et des directions d'arrivée égales respectivement à la troisième et à une quatrième direction d'arrivée $(\Theta_{k_{y2}}, \Theta_{k_{y3}})$, la quatrième direction d'arrivée étant différente de la première, de la deuxième et de la troisième direction d'arrivée, et

∘ une quatrième paire de sous-séries $\left\{ I\left(CTI_{j_{x2}}, \Theta_{k_{y2}}, t, ... \right) \right\}_{\Delta t_{I_{z4}}, E} \cup \left\{ I\left(CTI_{j_{x2}}, \Theta_{k_{y4}}, t, ... \right) \right\}_{\Delta t_{I_{z4}}, S}$ dont les impulsions ont des caractéristiques invariantes égales à la deuxième caractéristique invariante $(CTI_{j_{x2}})$ et des directions d'arrivée égales respectivement à la troisième et à la quatrième direction d'arrivée $(\Theta_{ky2}, \Theta_{ky4})$.

Le procédé comprend également une étape 160 de calcul, pour chaque paire de sous-séries, de la différence entre la date d'arrivée des impulsions reçues par réflexion par rapport à la date d'arrivée des impulsions reçues en direct. De telles différences de dates d'arrivée résultent des différences de trajets géométriques entre les impulsions directes reçues et les impulsions réfléchies reçues issues des mêmes impulsions émises.

Le procédé comprend, en outre, une étape 170 de détermination de la distance $d_i$ de chaque source $E_i$ au détecteur R à partir des différences de dates d'arrivée calculées et des directions d'arrivée des impulsions de chaque paire.

L'étape de détermination 170 comprend une phase de le calcul d'un histogramme, pour chaque paire, à partir des différences de dates d'arrivée calculées pour ladite paire et la détermination d'un retard principal $\tau_{S_{y'}/E_y}$ des impulsions reçues en réflexion par rapport aux impulsions reçues en direct à partir de l'histogramme calculé.

Chaque retard principal $\tau_{S_{y'}/E_y}$ est affecté à son couple $\left\{ I\left(CTI_{j_x}, \Theta_{k_y}, t, ... \right) \right\}_{\Delta t_{I_z}, E} \cup$ $\left\{ I\left(CTI_{j_x}, \Theta_{k_{y'}}, t, ... \right) \right\}_{\Delta t_{I_z}, S}$ ce qui peut alors être noté symboliquement de la façon suivante : $(CTI_{j_x}, \Theta_{k_y}, \Theta_{k_{y'}}, \Delta t_{1_z}, \tau_{S_{y'}/E_y})$.

De préférence, l'étape de détermination 170 comprend, également, une phase de comparaison des valeurs de chaque retard principal $\tau_{S_{y'}/E_y}$ déterminé par rapport à une plage de valeurs de référence. La plage de valeurs de référence est, par exemple, choisie en fonction de considérations géométriques, liées aux directions d'arrivée et à des hypothèses plausibles de distances dans les gammes d'intérêts. La plage de valeurs de référence s'étend, par exemple, au sens large entre 1 microseconde ($\mu$s) et 100 $\mu$s.

Avantageusement, la deuxième phase comprend également la comparaison du nombre d'occurrences relatif à chaque retard principal $\tau_{S_{y'}/E_y}$ déterminé par rapport à un seuil de référence. Le seuil de référence est, par exemple, choisi en fonction d'un pourcentage du nombre d'impulsions directes reçues pour chaque paire.

Au cours de la deuxième phase, les retards principaux $\tau_{S_{y'}/E_y}$ dont les valeurs ne sont pas comprises dans la plage de valeurs de référence et dont le nombre d'occurrences est strictement inférieur au seuil de référence, sont éliminés.

La deuxième phase permet donc de s'affranchir de valeurs aberrantes lorsque le retard principal $\tau_{S_{y'}/E_y}$ obtenu est en dehors de la plage de valeurs plausibles et des valeurs isolées et non significatives lorsque le nombre d'occurrences est en-dessous du seuil de référence.

Puis, l'étape de détermination 170 comprend une phase de calcul de la distance $d_i$ de chaque source $E_i$ au détecteur R, pour chaque configuration, à partir des retards principaux $\tau_{S_{y'}/E_y}$ calculés et des directions d'arrivée des impulsions de chaque paire.

Pour cela, la résolution du système d'équations (5.1) et (5.2) est effectuée.

En particulier, pour la première configuration de la figure 2, les deux paires $(CTI_{j_{x1}}, \Theta_{k_{y1}}, \Theta_{k_{y2}}, \Delta t_{I_z}, \tau_{S_{y2}/E_{y1}})$ et $(CTI_{j_{x2}}, \Theta_{k_{y2}}, \Theta_{k_{y1}}, \Delta t_{I_z}, \tau_{S_{y1}/E_{y2}})$ de chaque groupe permettent d'obtenir, d'une part, la distance bistatique $\Delta_{S_{y2}/E_{y1}} = c\tau_{S_{y2}/E_{y1}}$ et la différence de direction d'arrivée $\alpha_{E_{y1}S_{y2}} = \theta_{k_{y1}} - \theta_{k_{y2}}$ et, d'autre part, la distance bistatique $\Delta_{S_{y1}/E_{y2}} = c\tau_{S_{y1}/E_{y2}}$ et la différence de direction d'arrivée $\alpha_{E_{y2}S_{y1}} = \theta_{k_{y2}} - \theta_{k_{y1}}$.

Ces expressions de distances bistatiques et de différences de direction d'arrivée sont utilisées pour obtenir les coefficients du système d'équation (6) donnés par les expressions (9.1) et (9.2), soit :

$$(13.1) \begin{cases} b_{11} = \Delta_{S_{y1}/E_{y2}}{}^2 \\ b_{12} = -2\Delta_{S_{y1}/E_{y2}} \\ b_{13} = 2\Delta_{S_{y1}/E_{y2}} \\ b_{14} = -2\left(1 - \cos\left(\alpha_{E_{y2}S_{y1}}\right)\right) \end{cases}$$

et

$$(13.2) \begin{cases} b_{21} = -\Delta_{S_{y2}/E_{y1}}{}^2 \\ b_{22} = -2\Delta_{S_{y2}/E_{y1}} \\ b_{23} = 2\Delta_{S_{y2}/E_{y1}} \\ b_{24} = 2\left(1 - \cos\left(\alpha_{E_{y1}S_{y2}}\right)\right) \end{cases}$$

Pour la deuxième configuration de la figure 3, les trois paires $(CTI_{j_{x1}}, \Theta_{k_{y1}}, \Theta_{k_{y2}}, \Delta t_{l_z}, \tau_{S_{y2}/E_{y1}})$, $(CTI_{j_{x1}}, \Theta_{k_{y1}}, \Theta_{k_{y3}}, \Delta t_{l_z}, \tau_{S_{y3}/E_{y1}})$ et $(CTI_{j_{x2}}, \Theta_{k_{y2}}, \Theta_{k_{y3}}, \Delta t_{l_z}, \tau_{S_{y3}/E_{y2}})$ de chaque groupe permettent d'obtenir :

- la distance bistatique $\Delta_{S_{y2}/E_{y1}} = c\tau_{S_{y2}/E_{y1}}$ et la différence de direction d'arrivée $\alpha_{E_{y1}S_{y2}} = \theta_{k_{y1}} - \theta_{k_{y2}}$,
- la distance bistatique $\Delta_{S_{y3}/E_{y1}} = c\tau_{S_{y3}/E_{y1}}$ et la différence de direction d'arrivée $\alpha_{E_{y1}S_{y3}} = \theta_{k_{y1}} - \theta_{k_{y3}}$, et
- la distance bistatique $\Delta_{S_{y3}/E_{y2}} = c\tau_{S_{y3}/E_{y2}}$ et la différence de direction d'arrivée $\alpha_{E_{y2}S_{y3}} = \theta_{k_{yz}} - \theta_{k_{y3}}$.

Ces expressions de distances bistatiques et de différences de direction d'arrivée sont utilisées pour obtenir les coefficients du système d'équation (6) donnés par les expressions (9.2) et (9.3), soit :

$$(13.3) \begin{cases} b_{11} = 2\,\Delta_{S_{y3}/E_{y1}} \cdot \Delta_{S_{y3}/E_{y2}}\left(\Delta_{S_{y3}/E_{y1}} - \Delta_{S_{y3}/E_{y2}}\right) \\ b_{12} = 2\,\Delta_{S_{y3}/E_{y2}}\left(2\Delta_{S_{y3}/E_{y1}} - \Delta_{S_{y3}/E_{y2}}\left(1 - \cos\left(\alpha_{E_{y1}S_{y3}}\right)\right)\right) \\ b_{13} = 2\,\Delta_{S_{y3}/E_{y1}}\left(-2\Delta_{S_{y3}/E_{y2}} + \Delta_{S_{y3}/E_{y1}}\left(1 - \cos\left(\alpha_{E_{y2}S_{y3}}\right)\right)\right) \\ b_{14} = 4\,\Delta_{S_{y3}/E_{y1}}\left(1 - \cos\left(\alpha_{E_{y2}S_{y3}}\right)\right) - 4\Delta_{S_{y3}/E_{y2}}\left(1 - \cos\left(\alpha_{E_{y1}S_{y3}}\right)\right) \end{cases}$$

et

$$(13.2) \begin{cases} b_{21} = -\Delta_{S_{y2}/E_{y1}}{}^2 \\ b_{22} = -2\Delta_{S_{y2}/E_{y1}} \\ b_{23} = 2\Delta_{S_{y2}/E_{y1}} \\ b_{24} = 2\left(1 - \cos\left(\alpha_{E_{y1}S_{y2}}\right)\right) \end{cases}$$

Pour la deuxième configuration de la figure 4, les trois paires $(CTI_{j_{x1}}, \Theta_{k_{y1}}, \Theta_{k_{y4}}, \Delta t_{l_z}, \tau_{S_{y4}/E_{y1}})$, $(CTI_{j_{x2}}, \Theta_{k_{y2}}, \Theta_{k_{y1}}, \Delta t_{l_z}, \tau_{S_{y1}/E_{y2}})$ et $(CTI_{j_{x2}}, \Theta_{k_{y2}}, \Theta_{k_{y4}}, \Delta t_{l_z}, \tau_{S_{y4}/E_{y2}})$ de chaque groupe permettent d'obtenir :

- la distance bistatique $\Delta_{S_{y4}/E_{y1}} = c\tau_{S_{y4}/E_{y1}}$ et la différence de direction d'arrivée $\alpha_{E_{y1}S_{y4}} = \theta_{k_{y1}} - \theta_{k_{y4}}$,
- la distance bistatique $\Delta_{S_{y1}/E_{y2}} = c\tau_{S_{y1}/E_{y2}}$ et la différence de direction d'arrivée $\alpha_{E_{y2}S_{y1}} = \theta_{k_{y2}} - \theta_{k_{y1}}$, et
- la distance bistatique $\Delta_{S_{y4}/E_{y2}} = c\tau_{S_{y4}/E_{y2}}$ et la différence de direction d'arrivée $\alpha_{E_{y2}S_{y4}} = \theta_{k_{y2}} - 2\theta_{k_{y4}}$.

Ces expressions de distances bistatiques et de différences de direction d'arrivée sont utilisées pour obtenir les coefficients du système d'équation (6) donnés par les expressions (9.1) et (9.3), soit :

$$(13.1) \begin{cases} b_{11} = \Delta_{S_{y1}/E_{y2}}^{2} \\ b_{12} = -2\Delta_{S_{y1}/E_{y2}} \\ b_{13} = 2\Delta_{S_{y1}/E_{y2}} \\ b_{14} = -2\left(1 - \cos\left(\alpha_{E_{y2}S_{y1}}\right)\right) \end{cases}$$

Et

$$(13.4) \begin{cases} b_{21} = 2\,\Delta_{S_{y4}/E_{y1}}\cdot\Delta_{S_{y4}/E_{y2}}\left(\Delta_{S_{y4}/E_{y1}} - \Delta_{S_{y4}/E_{y2}}\right) \\ b_{22} = 2\,\Delta_{S_{y4}/E_{y2}}\left(2\Delta_{S_{y4}/E_{y1}} - \Delta_{S_{y4}/E_{y2}}\left(1 - \cos\left(\alpha_{E_{y1}S_{y4}}\right)\right)\right) \\ b_{23} = 2\,\Delta_{S_{y4}/E_{y1}}\left(-2\Delta_{S_{y4}/E_{y2}} + \Delta_{S_{y4}/E_{y1}}\left(1 - \cos\left(\alpha_{E_{y2}S_{y4}}\right)\right)\right) \\ b_{24} = 4\,\Delta_{S_{y4}/E_{y1}}\left(1 - \cos\left(\alpha_{E_{y2}S_{y4}}\right)\right) - 4\Delta_{S_{y4}/E_{y2}}\left(1 - \cos\left(\alpha_{E_{y1}S_{y4}}\right)\right) \end{cases}$$

Pour la troisième configuration de la figure 5, les quatre paires $(CTI_{jx1}, \Theta_{ky1}, \Theta_{ky3}, \Delta t_{lz}, \tau_{S_{y4}/E_{y1}})$, $(CTI_{jx1}, \Theta_{ky1}, \Theta_{ky4}, \Delta t_{lz}, \tau_{S_{y4}/E_{y1}})$, $(CTI_{jx2}, \Theta_{ky2}, \Theta_{ky3}, \Delta t_{lz}, \tau_{S_{y3}/E_{y2}})$ et $(CTI_{jx2}, \Theta_{ky2}, \Theta_{ky4}, \Delta t_{lz}, \tau_{S_{y4}/E_{y2}})$ de chaque groupe permettent d'obtenir :

- la distance bistatique $\Delta_{S_{y3}/E_{y1}} = c\tau_{S_{y3}/E_{y1}}$ et la différence de direction d'arrivée $\alpha_{E_{y1}S_{y3}} = \theta_{ky1} - \theta_{ky3}$,
- la distance bistatique $\Delta_{S_{y4}/E_{y1}} = c\tau_{S_{y4}/E_{y1}}$ et la différence de direction d'arrivée $\alpha_{E_{y1}S_{y4}} = \theta_{ky1} - \theta_{ky4}$,
- la distance bistatique $\Delta_{S_{y3}/E_{y2}} = c\tau_{S_{y3}/E_{y2}}$ et la différence de direction d'arrivée $\alpha_{E_{y2}S_{y3}} = \theta_{ky2} - \theta_{ky3}$, et
- la distance bistatique $\Delta_{S_{y4}/E_{y2}} = c\tau_{S_{y4}/E_{y2}}$ et la différence de direction d'arrivée $\alpha_{E_{y2}S_{y4}} = \theta_{ky2} - 2\theta_{ky4}$.

Ces expressions de distances bistatiques et de différences de direction d'arrivée sont utilisées pour obtenir les coefficients du système d'équation (6) donnés par les expressions (9.3) et (9.4), soit :

$$(13.3) \begin{cases} b_{11} = 2\,\Delta_{S_{y3}/E_{y1}}\cdot\Delta_{S_{y3}/E_{y2}}\left(\Delta_{S_{y3}/E_{y1}} - \Delta_{S_{y3}/E_{y2}}\right) \\ b_{12} = 2\,\Delta_{S_{y3}/E_{y2}}\left(2\Delta_{S_{y3}/E_{y1}} - \Delta_{S_{y3}/E_{y2}}\left(1 - \cos\left(\alpha_{E_{y1}S_{y3}}\right)\right)\right) \\ b_{13} = 2\,\Delta_{S_{y3}/E_{y1}}\left(-2\Delta_{S_{y3}/E_{y2}} + \Delta_{S_{y3}/E_{y1}}\left(1 - \cos\left(\alpha_{E_{y2}S_{y3}}\right)\right)\right) \\ b_{14} = 4\,\Delta_{S_{y3}/E_{y1}}\left(1 - \cos\left(\alpha_{E_{y2}S_{y3}}\right)\right) - 4\Delta_{S_{y3}/E_{y2}}\left(1 - \cos\left(\alpha_{E_{y1}S_{y3}}\right)\right) \end{cases}$$

et

$$(13.4) \begin{cases} b_{21} = 2\,\Delta_{S_{y4}/E_{y1}}\cdot\Delta_{S_{y4}/E_{y2}}\left(\Delta_{S_{y4}/E_{y1}} - \Delta_{S_{y4}/E_{y2}}\right) \\ b_{22} = 2\,\Delta_{S_{y4}/E_{y2}}\left(2\Delta_{S_{y4}/E_{y1}} - \Delta_{S_{y4}/E_{y2}}\left(1 - \cos\left(\alpha_{E_{y1}S_{y4}}\right)\right)\right) \\ b_{23} = 2\,\Delta_{S_{y4}/E_{y1}}\left(-2\Delta_{S_{y4}/E_{y2}} + \Delta_{S_{y4}/E_{y1}}\left(1 - \cos\left(\alpha_{E_{y2}S_{y4}}\right)\right)\right) \\ b_{24} = 4\,\Delta_{S_{y4}/E_{y1}}\left(1 - \cos\left(\alpha_{E_{y2}S_{y4}}\right)\right) - 4\Delta_{S_{y4}/E_{y2}}\left(1 - \cos\left(\alpha_{E_{y1}S_{y4}}\right)\right) \end{cases}$$

La distance $d_{y2}$ de la deuxième source $E_2$ au détecteur $R$ est donnée par l'expression (12) dont les coefficients sont ceux des expressions (11.2), (11.3) et (11.4) correspondant aux valeurs des $b_{ij}$ précédemment obtenues (13.1), (13.2), (13.3) ou (13.4) selon les configurations.

La distance $d_{y1}$ de la première source $E_1$ au détecteur R est donnée par l'expression (10).

La distance $RS_{y3}$ du premier réflecteur $S_{y3}$ au détecteur R est donnée par l'expression (3), on obtient donc :

$$RS_{y3} = \frac{\Delta_{S_{y3}/E_{y2}}{}^2 + 2\Delta_{S_{y3}/E_{y2}} \cdot d_{y2}}{2\Delta_{S_{y3}/E_{y2}} + 2d_{y2}\left(1 - \cos\left(\alpha_{E_{y2}S_{y3}}\right)\right)} \qquad (14)$$

La distance $RS_{y4}$ du deuxième réflecteur $S_{y4}$ au détecteur R est donnée par l'expression (3) on obtient donc :

$$RS_{y4} = \frac{\Delta_{S_{y4}/E_{y2}}{}^2 + 2\Delta_{S_{y4}/E_{y2}} \cdot d_{y2}}{2\Delta_{S_{y4}/E_{y2}} + 2d_{y2}\left(1 - \cos\left(\alpha_{E_{y2}S_{y4}}\right)\right)} \qquad (15)$$

Le procédé décrit permet donc la localisation de sources $E_1,..., E_n$ à partir d'un unique détecteur quasi-statique par rapport aux sources à localiser. Un tel procédé permet également la localisation des réflecteurs situés dans l'environnement des sources à localiser.

Plus précisément, un tel procédé permet de localiser deux sources dans un environnement comprenant au moins lesdites sources et deux réflecteurs quelle que soit la configuration des sources et des réflecteurs à la seule condition que les réflecteurs ne soient pas colocalisés entre eux et que les sources ne soient pas colocalisées entre elles.

La procédé propose de résoudre un seul système d'équations pour l'ensemble des configurations possibles avec des coefficients spécifiques à chacune desdites configurations.

La localisation des sources est basée uniquement sur des mesures de directions d'arrivée et de dates d'arrivée des impulsions radar provenant directement des émetteurs et indirectement de ceux-ci via des réflexions sur les objets matériels réflecteurs de l'environnement.

## Revendications

1. Procédé de localisation d'au moins deux sources ($E_1$, $E_2$) d'émission d'impulsions électromagnétiques dans un environnement, l'environnement comprenant au moins deux réflecteurs ($S_1$, $S_2$), le procédé comprenant les étapes de :

   - réception, par un détecteur (R), pour chaque source ($E_1$, $E_2$) à localiser, pendant une durée de fonctionnement du détecteur (R), d'au moins une même impulsion émise, reçue d'une part en direct de ladite source ($E_1$, $E_2$) et reçue d'autre part par réflexion sur l'un des réflecteurs ($S_1$, $S_2$),
   - mesure de la direction d'arrivée ($\Theta_{k_y}$), de la date d'arrivée (t) et d'au moins une caractéristique invariante ($CTI_{j_x}$) de chaque impulsion reçue,

   **caractérisé en ce que** le procédé comprend, en outre, les étapes de :

   - identification, parmi les impulsions reçues, des impulsions reçues en direct et des impulsions reçues en réflexion,
   - regroupement par paire d'impulsions reçues en direct avec des impulsions reçues en réflexion, les impulsions de chaque paire ayant les mêmes caractéristiques invariantes ($CTI_{j_x}$) et des directions d'arrivée ($\Theta_{k_y}$) différentes,
   - calcul, pour chaque paire, de la différence entre la date d'arrivée (t) de l'impulsion reçue par réflexion par rapport à la date d'arrivée (t) de l'impulsion reçue en direct, et
   - détermination de la distance (d) de chaque source ($E_1$, $E_2$) au détecteur (R) à partir des différences de dates d'arrivée calculées et des directions d'arrivée ($\Theta_{k_y}$) des impulsions de chaque paire.

2. Procédé selon la revendication 1, dans lequel la durée de fonctionnement est formée de tranches de temps ($\Delta t_l$) de durées identiques, le procédé comprenant la définition d'une durée glissante ($\Delta T$) au moins égale à la durée d'une tranche de temps ($\Delta t_l$), les étapes d'identification et de regroupement étant mises en œuvre sur la durée glissante ($\Delta T$), les impulsions de chaque paire appartenant à une même tranche de temps.

3. Procédé selon la revendication 2, dans lequel le procédé comprend, en outre, pour chaque tranche de temps ($\Delta t_l$), une étape de tri des impulsions reçues en fonction de la direction d'arrivée ($\Theta_{k_y}$) et des caractéristiques invariantes

($CTI_{jx}$) de chaque impulsion pour obtenir des sous-séries d'impulsions, les impulsions de chaque sous-série ayant des directions d'arrivée ($\Theta_{ky}$) égales et des caractéristiques invariantes ($CTI_{jx}$) égales, les impulsions de chaque sous-série étant regroupées dans une même paire lors de l'étape de regroupement.

4. Procédé selon la revendication 3, dans lequel l'étape de mesure comprend, en outre, la détermination, sur les sous-séries successives de chaque durée glissante ($\Delta T$), de la puissance maximale parmi les puissances des impulsions des sous-séries ayant des directions d'arrivée ($\Theta_{ky}$) égales, des caractéristiques invariantes ($CTI_{jx}$) égales et appartenant à une même durée glissante ($\Delta T$), les impulsions reçues en direct et les impulsions reçues en réflexion étant identifiées, pour chaque sous-série d'impulsions, par comparaison de la puissance maximale déterminée pour ladite sous-série par rapport à au moins deux seuils.

5. Procédé selon la revendication 4, dans lequel les impulsions des sous-séries associées à ladite puissance maximale sont identifiées reçues en direct lorsque la puissance maximale est supérieure ou égale à un premier seuil et les impulsions des sous-séries associées à ladite puissance maximale sont identifiées reçues en réflexion lorsque la puissance maximale est strictement inférieure à un deuxième seuil, le deuxième seuil étant inférieur ou égal au premier seuil.

6. Procédé selon l'une quelconque des revendications 1 à 5, dans lequel l'étape de détermination comprend le rassemblement des paires sur des durées prédéterminées pour former des groupes de deux paires, de trois paires ou de quatre paires, le nombre de paires par groupe étant égal au nombre de directions d'arrivées ($\Theta_{ky}$) différentes correspondant aux impulsions reçues sur la durée prédéterminée, la distance (d) de chaque source ($E_1$, $E_2$) au détecteur (R) étant déterminée à partir des différences de dates d'arrivée calculées pour les paires de chaque groupe et des directions d'arrivée ($\Theta_{ky}$) des impulsions des paires de chaque groupe,
chaque groupe de deux paires comprenant :

   ◦ une première paire d'impulsions de caractéristiques invariantes égales à une première caractéristique invariante ($CTI_{jx1}$), de directions d'arrivée ($\Theta_{ky1}$,$\Theta_{ky2}$) différentes, et
   ◦ une deuxième paire d'impulsions de caractéristiques invariantes égales à une deuxième caractéristique invariante ($CTI_{jx2}$) et de mêmes directions d'arrivée ($\Theta_{ky1}$,$\Theta_{ky2}$) différentes,

chaque groupe de trois paires comprenant :

   ◦ une première paire d'impulsions de caractéristiques invariantes égales à une première caractéristique invariante ($CTI_{jx1}$), de directions d'arrivée égales respectivement à une première et à une deuxième direction d'arrivée ($\Theta_{ky1}$,$\Theta_{ky2}$) différentes l'une de l'autre,
   ◦ une deuxième paire d'impulsions de caractéristiques invariantes égales à la première caractéristique invariante ($CTI_{jx1}$), de directions d'arrivée égales respectivement à la première et à une troisième direction d'arrivée ($\Theta_{ky1}$,$\Theta_{ky3}$), la troisième direction d'arrivée étant différente de la première et de la deuxième direction d'arrivée, et
   ◦ une troisième paire d'impulsions de caractéristiques invariantes égales à une deuxième caractéristique invariante ($CTI_{jx2}$) différente de la première caractéristique invariante, de directions d'arrivée égales respectivement à la deuxième et à la troisième direction d'arrivée ($\Theta_{ky2}$,$\Theta_{ky3}$),

chaque groupe de quatre paires comprenant :

   ◦ une première paire d'impulsions de caractéristiques invariantes égales à une première caractéristique invariante ($CTI_{jx1}$), de directions d'arrivée égales respectivement à une première et à une deuxième direction d'arrivée ($\Theta_{ky1}$,$\Theta_{ky3}$) différentes l'une de l'autre,
   ◦ une deuxième paire d'impulsions de caractéristiques invariantes égales à la première caractéristique invariante ($CTI_{jx1}$) de directions d'arrivée égales respectivement à la première et à une troisième direction d'arrivée ($\Theta_{ky1}$,$\Theta_{ky4}$), la troisième direction d'arrivée étant différente de la première et de la deuxième direction d'arrivée,
   ◦ une troisième paire d'impulsions de caractéristiques invariantes égales à une deuxième caractéristique invariante ($CTI_{jx2}$) différente de la première caractéristique invariante, de directions d'arrivée égales respectivement à la troisième et à une quatrième direction d'arrivée ($\Theta_{ky2}$,$\Theta_{ky3}$), la quatrième direction d'arrivée étant différente de la première, de la deuxième et de la troisième direction d'arrivée, et
   ◦ une quatrième paire d'impulsions de caractéristiques invariantes égales à la deuxième caractéristique invariante ($CTI_{jx2}$), de directions d'arrivée égales respectivement à la troisième et à la quatrième direction d'arrivée ($\Theta_{ky2}$,$\Theta_{ky4}$).

7. Procédé selon la revendication 6, dans lequel chaque groupe permet de déterminer les distances ($d_1$, $d_2$) respectives de deux des sources ($E_1$, $E_2$) à localiser au détecteur (R), lesdites distances ($d_1$, $d_2$) étant calculées :

   ◦ pour chaque groupe de deux paires d'impulsions à partir des équations suivantes :

$$\begin{cases} d_1 = \dfrac{\Delta_{S_1/E_2}{}^2 + 2\Delta_{S_1/E_2}.d_2}{2\Delta_{S_1/E_2} + 2d_2\big(1 - \cos(\alpha_{E_2S_1})\big)} \\[3mm] d_2 = \dfrac{\Delta_{S_2/E_1}{}^2 + 2\Delta_{S_2/E_1}.d_1}{2\Delta_{S_2/E_1} + 2d_1\big(1 - \cos(\alpha_{E_1S_2})\big)} \end{cases}$$

   ◦ pour chaque groupe de trois paires d'impulsions à partir des équations suivantes :

$$\begin{cases} \dfrac{\Delta_{S_1/E_1}{}^2 + 2\Delta_{S_1/E_1}.d_1}{2\Delta_{S_1/E_1} + 2d_1\big(1 - \cos(\alpha_{E_1S_1})\big)} = \dfrac{\Delta_{S_1/E_2}{}^2 + 2\Delta_{S_1/E_2}.d_2}{2\Delta_{S_1/E_2} + 2d_2\big(1 - \cos(\alpha_{E_2S_1})\big)} \\[3mm] d_2 = \dfrac{\Delta_{S_2/E_1}{}^2 + 2\Delta_{S_2/E_1}.d_1}{2\Delta_{S_2/E_1} + 2d_1\big(1 - \cos(\alpha_{E_1S_2})\big)} \end{cases}$$

   ou

$$\begin{cases} d_1 = \dfrac{\Delta_{S_1/E_2}{}^2 + 2\Delta_{S_1/E_2}.d_2}{2\Delta_{S_1/E_2} + 2d_2\big(1 - \cos(\alpha_{E_2S_1})\big)} \\[3mm] \dfrac{\Delta_{S_2/E_1}{}^2 + 2\Delta_{S_2/E_1}.d_1}{2\Delta_{S_2/E_1} + 2d_1\big(1 - \cos(\alpha_{E_1S_2})\big)} = \dfrac{\Delta_{S_2/E_2}{}^2 + 2\Delta_{S_2/E_2}.d_2}{2\Delta_{S_2/E_2} + 2d_2\big(1 - \cos(\alpha_{E_2S_2})\big)} \end{cases}$$

   ◦ pour chaque groupe de quatre paires d'impulsions à partir des équations suivantes :

$$\begin{cases} \dfrac{\Delta_{S_1/E_1}{}^2 + 2\Delta_{S_1/E_1}.d_1}{2\Delta_{S_1/E_1} + 2d_1\big(1 - \cos(\alpha_{E_1S_1})\big)} = \dfrac{\Delta_{S_1/E_2}{}^2 + 2\Delta_{S_1/E_2}.d_2}{2\Delta_{S_1/E_2} + 2d_2\big(1 - \cos(\alpha_{E_2S_1})\big)} \\[3mm] \dfrac{\Delta_{S_2/E_1}{}^2 + 2\Delta_{S_2/E_1}.d_1}{2\Delta_{S_2/E_1} + 2d_1\big(1 - \cos(\alpha_{E_1S_2})\big)} = \dfrac{\Delta_{S_2/E_2}{}^2 + 2\Delta_{S_2/E_2}.d_2}{2\Delta_{S_2/E_2} + 2d_2\big(1 - \cos(\alpha_{E_2S_2})\big)} \end{cases}$$

   Où

   - $\Delta_{S_1/E_1} = c.\,\tau_{S_1/E_1}$, $\Delta_{S_2/E_2} = c.\,\tau_{S_2/E_2}$, $\Delta_{S_1/E_2} = c.\tau_{S_1/E_2}$, $\Delta_{S_2}/E_1 = c.\,\tau_{S2/E_1}$,
   - $d_1$ est la distance de la première source $E_1$ au détecteur (R),
   - $d_2$ est la distance de la deuxième source $E_2$ au détecteur (R),
   - c est la vitesse de propagation des ondes électromagnétiques,
   - $\tau_{S_1/E_1}$ est la différence de date d'arrivée entre les impulsions reçues par réflexion sur un premier réflecteur par rapport aux impulsions reçues en direct de la première source,
   - $\tau_{S_2/E_2}$ est la différence de date d'arrivée entre les impulsions reçues par réflexion sur un deuxième réflecteur par rapport aux impulsions reçues en direct de la deuxième source,
   - $\tau_{S_1/E_2}$ est la différence de date d'arrivée entre les impulsions reçues par réflexion sur le premier réflecteur par rapport aux impulsions reçues en direct de la deuxième source,
   - $\tau_{S_2/E_1}$ est la différence de date d'arrivée entre les impulsions reçues par réflexion sur le deuxième réflecteur par rapport aux impulsions reçues en direct de la première source,
   - $\alpha_{E_2S_2}$ est l'écart angulaire entre la deuxième source et le deuxième réflecteur vu depuis le détecteur (R),

- $\alpha_{E_1S_1}$ est l'écart angulaire entre la première source et le premier réflecteur vu depuis le détecteur (R),
- $\alpha_{E_2S_1}$ est l'écart angulaire entre la deuxième source et le premier réflecteur vu depuis le détecteur (R), et
- $\alpha_{E_1S_2}$ est l'écart angulaire entre la deuxième source et le premier réflecteur vu depuis le détecteur (R).

8. Procédé selon la revendication 7, dans lequel l'étape de détermination comprend le calcul d'un histogramme, pour chaque paire, à partir des différences de dates d'arrivée calculées pour ladite paire et la détermination d'un retard principal des impulsions reçues en réflexion par rapport aux impulsions reçues en direct à partir de l'histogramme calculé, les différences de date d'arrivée ($\tau_{S_1/E_1}$, $\tau_{S_2/E_2}$, $\tau_{S_1/E_2}$, $\tau_{S_2/E_1}$) des équations de la revendication 7 étant égales respectivement à l'un des retards principaux déterminés.

9. Procédé selon l'une quelconque des revendications 1 à 8, dans lequel les caractéristiques invariantes ($CTI_{jx}$) de chaque impulsion comprennent au moins l'une des caractéristiques parmi : la largeur de l'impulsion, la fréquence porteuse de l'impulsion et la modulation intra-impulsion intentionnelle.

10. Détecteur (R) de localisation d'au moins deux sources ($E_1$, $E_2$) d'émission d'impulsions électromagnétiques dans un environnement, l'environnement comprenant au moins deux réflecteurs ($S_1$, $S_2$), le détecteur (R) étant propre à mettre en œuvre les étapes du procédé selon l'une quelconque des revendications 1 à 9.


**Patentansprüche**

1. Verfahren zur Lokalisierung von mindestens zwei Quellen ($E_1$, $E_2$) der Aussendung von elektromagnetischen Impulsen in einer Umgebung, wobei die Umgebung mindestens zwei Reflektoren ($S_1$, $S_2$) enthält, wobei das Verfahren die Schritte umfasst:

   - Empfangen durch einen Detektor (R) während einer Betriebsdauer des Detektors (R) für jede zu lokalisierende Quelle ($E_1$, $E_2$) mindestens eines selben ausgesandten Impulses, der einerseits direkt von der Quelle ($E_1$, $E_2$) empfangen wird und andererseits durch Reflexion an einem der Reflektoren ($S_1$, $S_2$) empfangen wird,
   - Messen der Ankunftsrichtung ($\theta_{ky}$), des Ankunftsdatums (T) und mindestens einer invarianten Charakteristik ($CTI_{jx}$) jedes empfangenen Impulses,

   **dadurch gekennzeichnet, dass** das Verfahren außerdem die Schritte umfasst:

   - Identifizieren der direkt empfangenen Impulse und der durch Reflexion empfangenen Impulse aus den empfangenen Impulsen,
   - Gruppieren der direkt empfangenen Impulse und der durch Reflexion empfangenen Impulse in Paare, wobei die Impulse jedes Paars dieselben invarianten Charakteristika ($CTI_{jx}$) und unterschiedliche Ankunftsrichtungen ($\theta_{ky}$) aufweisen,
   - Berechnen der Differenz zwischen dem Ankunftsdatum (t) des durch Reflexion empfangenen Impulses und dem Ankunftsdatum (t) des direkt empfangenen Impulses für jedes Paar, und
   - Bestimmen der Entfernung (d) jeder Quelle ($E_1$, $E_2$) zum Detektor (R) aus den berechneten Differenzen der Ankunftsdaten und der Ankunftsrichtungen ($\theta_{ky}$) der Impulse jedes Paars.

2. Verfahren nach Anspruch 1, bei dem die Betriebsdauer durch Zeitabschnitte ($\Delta t_l$) identischer Dauer gebildet wird, wobei das Verfahren die Definition einer gleitenden Dauer ($\Delta T$) mindestens gleich der Dauer eines Zeitabschnittes ($\Delta t_l$) umfasst, wobei die Schritte des Identifizierens und Gruppierens über die gleitende Dauer ($\Delta T$) durchgeführt wird und die Impulse jedes Paars zu demselben Zeitabschnitt gehören.

3. Verfahren nach Anspruch 2, bei dem das Verfahren außerdem für jeden Zeitabschnitt ($\Delta t_l$) einen Sortierungsschritt der empfangenen Impulse abhängig von der Ankunftsrichtung ($\theta_{ky}$) und den invarianten Charakteristika ($CTI_{jx}$) jedes Impulses umfasst, um Unterreihen von Impulsen zu erhalten, wobei die Impulse jeder Unterreihe gleiche Ankunftsrichtungen ($\theta_{ky}$) und gleiche invariante Charakteristika ($CTI_{jx}$) aufweisen und die Impulse jeder Unterreihen während des Gruppierungsschritts in ein selbes Paar gruppiert werden.

4. Verfahren nach Anspruch 3, bei dem der Messschritt außerdem über die aufeinanderfolgenden Unterreihen jeder gleitenden Dauer ($\Delta T$) die Bestimmung der maximalen Leistung aus den Leistungen der Impulse der Unterreihen, die gleiche Ankunftsrichtungen ($\theta_{ky}$), gleiche invariante Charakteristika ($CTI_{jx}$) aufweisen und zur selben gleitenden Dauer ($\Delta T$) gehören,umfasst, wobei die direkt empfangenen Impulse und die durch Reflexion empfangenen Impulse für jede Unterreihe von Impulsen durch Vergleich der für diese Unterreihe bestimmten maximalen Leistung mit mindestens zwei Schwellen identifiziert werden.

5. Verfahren nach Anspruch 4, bei dem die Impulse der zur maximalen Leistung zugeordneten Unterreihen als direkt empfangen identifiziert werden, wenn die maximale Leistung größer als eine erste Schwelle oder gleich dieser ist und die Impulse der der maximalen Leistung zugeordneten Unterreihen als durch Reflexion empfangen identifiziert werden, wenn die maximale Leistung streng kleiner als eine zweite Schwelle ist, wobei die zweite Schwelle kleiner als die erste Schwelle oder gleich dieser ist.

6. Verfahren nach einem beliebigen der Ansprüche 1 bis 5, bei dem der Bestimmungsschritt das Sammeln von Paaren über vorbestimmte Dauern umfasst, um Gruppen von zwei Paaren, drei Paaren oder vier Paaren zu bilden, wobei die Zahl von Paaren pro Gruppe gleich der Anzahl von unterschiedlichen Ankunftsrichtungen ($\theta_{ky}$) entsprechend den über die vorbestimmte Dauer empfangenen Impulsen ist, wobei die Entfernung (d) jeder Quelle ($E_1$, $E_2$) zum Detektor (R) aus den Differenzen der für die Paare jeder Gruppe berechneten Ankunftsdaten und den Ankunftsrichtungen ($\theta_{ky}$) der Impulse der Paare jeder Gruppe bestimmt wird,
wobei jede Gruppe von zwei Paaren umfasst:

   ◦ ein erstes Paar von Impulsen mit invarianten Charakteristika gleich einer ersten invarianten Charakteristik ($CTI_{jx1}$) mit unterschiedlichen Ankunftsrichtungen ($\theta_{ky1}$, $\theta_{ky2}$) und
   ◦ ein zweites Paar von Impulsen mit invarianten Charakteristika gleich einer zweiten invarianten Charakteristik ($CTI_{jx2}$) und mit gleichen unterschiedlichen Ankunftsrichtungen ($\theta_{ky1}$, $\theta_{ky2}$),

wobei jede Gruppe von drei Paaren umfasst:

   ◦ ein erstes Paar von Impulsen mit invarianten Charakteristika gleich einer ersten invarianten Charakteristik ($CTI_{jx1}$) mit Ankunftsrichtungen jeweils gleich einer ersten und einer zweiten Ankunftsrichtung ($\theta_{ky1}$, $\theta_{ky2}$), die unterschiedlich zueinander sind,
   ◦ ein zweites Paar von Impulsen mit invarianten Charakteristika gleich der ersten invarianten Charakteristik ($CTI_{jx1}$) mit Ankunftsrichtungen jeweils gleich der ersten und einer dritten Ankunftsrichtung ($\theta_{ky1}$, $\theta_{ky3}$), die unterschiedlich zu der ersten und zweiten Ankunftsrichtung ist, und
   ◦ ein drittes Paar von Impulsen mit invarianten Charakteristika gleich einer zweiten invarianten Charakteristik ($CTI_{jx2}$), unterschiedlich zur ersten invarianten Charakteristik, mit Ankunftsrichtungen jeweils gleich der zweiten und der dritten Ankunftsrichtung ($\theta_{ky2}$, $\theta_{ky3}$),

jede Gruppe von vier Paaren umfasst:

   ◦ ein erstes Paar von Impulsen mit invarianten Charakteristika gleich einer ersten invarianten Charakteristik ($CTI_{jx1}$) mit Ankunftsrichtungen jeweils gleich einer ersten und einer zweiten Ankunftsrichtung ($\theta_{ky1}$, $\theta_{ky3}$), die unterschiedlich zueinander sind,
   ◦ ein zweites Paar von Impulsen mit invarianten Charakteristika gleich der ersten invarianten Charakteristik ($CTI_{jx1}$), mit Ankunftsrichtungen jeweils gleich der ersten und einer dritten Ankunftsrichtung ($\theta_{ky1}$, $\theta_{ky4}$), wobei die dritte Ankunftsrichtung unterschiedlich zu der ersten und zweiten Ankunftsrichtung ist, und
   ◦ ein drittes Paar von Impulsen mit invarianten Charakteristika gleich einer zweiten invarianten Charakteristik ($CTI_{jx2}$), unterschiedlich zur ersten invarianten Charakteristik, mit Ankunftsrichtungen jeweils gleich der dritten und einer vierten Ankunftsrichtung ($\theta_{ky2}$, $\theta_{ky3}$), wobei die vierte Ankunftsrichtung unterschiedlich zur ersten, zweiten und dritten Ankunftsrichtung ist, und
   ◦ ein viertes Paar von Impulsen mit invarianten Charakteristika gleich einer zweiten invarianten Charakteristik ($CTI_{jx2}$) und mit Ankunftsrichtungen jeweils gleich der dritten und der vierten Ankunftsrichtung ($\theta_{ky2}$, $\theta_{ky4}$).

7. Verfahren nach Anspruch 6, bei dem jede Gruppe ermöglicht, die jeweiligen Entfernungen ($d_1$, $d_2$) von zwei der zu lokalisieren Quellen ($E_1$, $E_2$) zum Detektor (R) zu bestimmen, wobei die Entfernungen ($d_1$, $d_2$) berechnet werden:

   ◦ für jede Gruppe von zwei Impulspaaren aus den folgenden Gleichungen:

$$\begin{cases} d_1 = \dfrac{\Delta_{S_1/E_2}{}^2 + 2\Delta_{S_1/E_2}\cdot d_2}{2\Delta_{S_1/E_2} + 2d_2\big(1 - \cos(\alpha_{E_2S_1})\big)} \\[3mm] d_2 = \dfrac{\Delta_{S_2/E_1}{}^2 + 2\Delta_{S_2/E_1}\cdot d_1}{2\Delta_{S_2/E_1} + 2d_1\big(1 - \cos(\alpha_{E_1S_2})\big)} \end{cases}$$

∘ für jede Gruppe von drei Impulspaaren aus den folgenden Gleichungen:

$$\begin{cases} \dfrac{\Delta_{S_1/E_1}{}^2 + 2\Delta_{S_1/E_1}\cdot d_1}{2\Delta_{S_1/E_1} + 2d_1\big(1 - \cos(\alpha_{E_1S_1})\big)} = \dfrac{\Delta_{S_1/E_2}{}^2 + 2\Delta_{S_1/E_2}\cdot d_2}{2\Delta_{S_1/E_2} + 2d_2\big(1 - \cos(\alpha_{E_2S_1})\big)} \\[3mm] d_2 = \dfrac{\Delta_{S_2/E_1}{}^2 + 2\Delta_{S_2/E_1}\cdot d_1}{2\Delta_{S_2/E_1} + 2d_1\big(1 - \cos(\alpha_{E_1S_2})\big)} \end{cases}$$

oder

$$\begin{cases} d_1 = \dfrac{\Delta_{S_1/E_2}{}^2 + 2\Delta_{S_1/E_2}\cdot d_2}{2\Delta_{S_1/E_2} + 2d_2\big(1 - \cos(\alpha_{E_2S_1})\big)} \\[3mm] \dfrac{\Delta_{S_2/E_1}{}^2 + 2\Delta_{S_2/E_1}\cdot d_1}{2\Delta_{S_2/E_1} + 2d_1\big(1 - \cos(\alpha_{E_1S_2})\big)} = \dfrac{\Delta_{S_2/E_2}{}^2 + 2\Delta_{S_2/E_2}\cdot d_2}{2\Delta_{S_2/E_2} + 2d_2\big(1 - \cos(\alpha_{E_2S_2})\big)} \end{cases}$$

∘ für jede Gruppe von vier Impulspaaren aus den folgenden Gleichungen:

$$\begin{cases} \dfrac{\Delta_{S_1/E_1}{}^2 + 2\Delta_{S_1/E_1}\cdot d_1}{2\Delta_{S_1/E_1} + 2d_1\big(1 - \cos(\alpha_{E_1S_1})\big)} = \dfrac{\Delta_{S_1/E_2}{}^2 + 2\Delta_{S_1/E_2}\cdot d_2}{2\Delta_{S_1/E_2} + 2d_2\big(1 - \cos(\alpha_{E_2S_1})\big)} \\[3mm] \dfrac{\Delta_{S_2/E_1}{}^2 + 2\Delta_{S_2/E_1}\cdot d_1}{2\Delta_{S_2/E_1} + 2d_1\big(1 - \cos(\alpha_{E_1S_2})\big)} = \dfrac{\Delta_{S_2/E_2}{}^2 + 2\Delta_{S_2/E_2}\cdot d_2}{2\Delta_{S_2/E_2} + 2d_2\big(1 - \cos(\alpha_{E_2S_2})\big)} \end{cases}$$

wobei

- $\Delta_{S1/E1} = C.\ \tau_{S1/E1}$, $\Delta_{S2/E2} = C.\ \tau_{S2/E2}$, $\Delta_{S1/E2} = C.\ \tau_{S1/E2}$, $\Delta_{S2/E1} = C.\ \tau_{S2/E1}$,
- $d_1$ die Entfernung der ersten Quelle $E_1$ zum Detektor (R) ist,
- $d_2$ die Entfernung der zweiten Quelle $E_2$ zum Detektor (R) ist,
- c die Ausbreitungsgeschwindigkeit der elektromagnetischen Wellen ist,
- $\tau_{S1/E1}$ die Differenz des Ankunftsdatums zwischen den durch Reflexion an einem ersten Reflektor empfangenen Impulsen und den direkt von der ersten Quelle empfangenen Impulsen ist,
- $\tau_{S2/E2}$ die Differenz des Ankunftsdatums zwischen den durch Reflexion an einem zweiten Reflektor empfangenen Impulsen und den direkt von der ersten zweiten empfangenen Impulsen ist,
- $\tau_{S1/E2}$ die Differenz des Ankunftsdatums zwischen den durch Reflexion an dem ersten Reflektor empfangenen Impulsen und den direkt von der zweiten Quelle empfangenen Impulsen ist,
- $\tau_{S2/E1}$ die Differenz des Ankunftsdatums zwischen den durch Reflexion an dem zweiten Reflektor empfangenen Impulsen und den direkt von der ersten Quelle empfangenen Impulsen ist,
- $\alpha_{E2S2}$ der Winkelabstand zwischen der zweiten Quelle und dem zweiten Reflektor, gesehen von dem Detektor (R) ist,
- $\alpha_{E1S1}$ der Winkelabstand zwischen der ersten Quelle und dem ersten Reflektor, gesehen von dem Detektor (R) ist,
- $\alpha_{E2S1}$ der Winkelabstand zwischen der zweiten Quelle und dem ersten Reflektor, gesehen von dem Detektor (R) ist,
- $\alpha_{E1S2}$ der Winkelabstand zwischen der zweiten Quelle und dem ersten Reflektor, gesehen von dem Detektor (R) ist.

8. Verfahren nach Anspruch 7, bei dem der Bestimmungsschritt die Berechnung eines Histogramms für jedes Paar aus den für dieses Paar berechneten Differenzen der Ankunftsdaten und die Bestimmung einer Hauptverzögerung der durch Reflexion empfangenen Impulse in Bezug auf die direkt empfangenen Impulse aus dem berechneten Histogramm umfasst, wobei die Differenzen der Ankunftsdaten ($\tau_{S1/E1}$, $\tau_{S2/E2}$, $\tau_{S1/E2}$, $\tau_{S2/E1}$) der Gleichungen des Anspruchs 7 jeweils gleich einer der bestimmten Hauptverzögerungen ist.

9. Verfahren nach einem beliebigen der Ansprüche 1 bis 8, bei dem die invarianten Charakteristika ($CTI_{jx}$) jedes Impulses mindestens eine der Charakteristika ist aus: Impulslänge, Trägerfrequenz des Impulses und intendierte Intraimpuls-Modulation.

10. Detektor (R) zur Lokalisierung von mindestens zwei Quellen ($E_1$, $E_2$) der Aussendung von elektromagnetischen Impulsen in einer Umgebung, wobei die Umgebung mindestens zwei Reflektoren ($S_1$, $S_2$) enthält, wobei der Detektor (R) geeignet ist, die Schritte des Verfahrens nach einem der beliebigen Ansprüche 1 bis 9 durchzuführen.

**Claims**

1. A method for locating at least two sources ($E_1$, $E_2$) emitting electromagnetic pulses in an environment, the environment comprising at least two reflectors ($S_1$, $S_2$), the method comprising the following steps:

   - receiving, by a detector (R), for each source ($E_1$, $E_2$) to be located, for an operating duration of the detector (R), at least one same emitted pulse, received on the one hand directly from said source ($E_1$, $E_2$) and received on the other hand by reflection on one of the reflectors ($S_1$, $S_2$),
   - measuring the direction of arrival ($\Theta_{k_y}$), the date of arrival (t) and at least one invariant characteristic ($CTI_{jx}$) of each received pulse,

   **characterized in that** the method further comprises the following steps:

   - identification, among the received pulses, of the pulses received directly and the pulses received by reflection,
   - grouping by pairs of pulses received directly with pulses received by reflection, the pulses of each pair having the same invariant characteristics ($CTI_{jx}$) and different directions of arrival ($\Theta_{k_y}$),
   - calculating, for each pair, the difference between the date of arrival (t) of the pulse received by reflection relative to the date of arrival (t) of the pulse received directly, and
   - determining the distance (d) of each source ($E_1$, $E_2$) from the detector (R) from calculated differences in dates of arrival and from the directions of arrival ($\Theta_{k_y}$) of the pulses of each pair.

2. The method according to claim 1, wherein the operating duration is made up of time brackets ($\Delta t_l$) with identical durations, the method comprising defining a sliding duration ($\Delta T$) at least equal to the duration of a time bracket ($\Delta t_l$), the identification and grouping steps being carried out over a sliding duration ($\Delta T$), the pulses of each pair belonging to a same time bracket.

3. The method according to claim 2, wherein the method further comprises, for each time bracket ($\Delta t_l$), a step for sorting the received pulses based on the direction of arrival ($\Theta_{k_y}$) and on the invariant characteristics ($CTI_{jx}$) of each pulse to obtain sub-series of pulses, the pulses of each sub-series having equal directions of arrival ($\Theta_{k_y}$) and equal invariant characteristics ($CTI_{jx}$), the pulses of each sub-series being grouped together in a same pair during the grouping step.

4. The method according to claim 3, wherein the measuring step further comprises the determination, on the successive sub-series of each sliding duration ($\Delta T$), of the maximum power from among the powers of the pulses of the sub-series having equal directions of arrival ($\Theta_{k_y}$), equal invariant characteristics ($CTI_{jx}$) and belonging to a same sliding duration ($\Delta T$), the pulses received directly and the pulses received by reflection being identified, for each sub-series of pulses, by comparing the maximum power determined for said sub-series to at least two thresholds.

5. The method according to claim 4, wherein the pulses of the sub-series associated with said maximum power are identified as received directly when the maximum power is greater than or equal to a first threshold and the pulses of the sub-series associated with said maximum power are identified as received by reflection when the maximum power is strictly below a second threshold, the second threshold being less than or equal to the first threshold.

6. The method according to any one of claims 1 to 5, wherein the determination step comprises gathering pairs over predetermined durations to form groups of two pairs, three pairs or four pairs, the number of pairs per group being equal to the number of different directions of arrival ($\Theta_{k_y}$) corresponding to the pulses received over the predetermined duration, the distance (d) from each source ($E_1$, $E_2$) to the detector (R) being determined from differences in dates of arrival calculated for the pairs of each group and from the directions of arrival ($\Theta_{k_y}$) of the pulses of the pairs of each group,

each group of two pairs comprising:

- a first pair of pulses of invariant characteristics equal to a first invariant characteristic ($CTI_{j_{x1}}$), of different directions of arrival ($\Theta_{k_{y1}}$, $\Theta_{k_{y2}}$), and
- a second pair of pulses of invariant characteristics equal to a second invariant characteristic ($CTI_{j_{x2}}$) and with same different directions of arrival ($\Theta_{k_{y1}}$, $\Theta_{k_{y2}}$),

each group of three pairs comprising:

- a first pair of pulses of invariant characteristics equal to a first invariant characteristic ($CTI_{j_{x1}}$), with directions of arrival respectively equal to a first and second direction of arrival ($\Theta_{k_{y1}}$, $\Theta_{k_{y2}}$) different from one another,
- a second pair of pulses of invariant characteristics equal to the first invariant characteristic ($CTI_{j_{x1}}$), with directions of arrival respectively equal to the first and a third direction of arrival ($\Theta_{k_{y1}}$, $\Theta_{k_{y3}}$), the third direction of arrival being different from the first and second directions of arrival, and
- a third pair of pulses of invariant characteristics equal to a second invariant characteristic ($CTI_{j_{x2}}$) different from the first invariant characteristic, with directions of arrival respectively equal to the second and third directions of arrival ($\Theta_{k_{y2}}$, $\Theta_{k_{y3}}$),

each group of four pairs comprising:

- a first pair of pulses of invariant characteristics equal to a first invariant characteristic ($CTI_{j_{x1}}$), with directions of arrival respectively equal to a first and second direction of arrival ($\Theta_{k_{y1}}$, $\Theta_{k_{y3}}$) different from one another,
- a second pair of pulses of invariant characteristics equal to the first invariant characteristic ($CTI_{j_{x1}}$), with directions of arrival respectively equal to the first and a third direction of arrival ($\Theta_{k_{y1}}$, $\Theta_{k_{y4}}$), the third direction of arrival being different from the first and second directions of arrival,
- a third pair of pulses of invariant characteristics equal to a second invariant characteristic ($CTI_{j_{x2}}$) different from the first invariant characteristic, with directions of arrival respectively equal to the third and a fourth direction of arrival ($\Theta_{k_{y2}}$, $\Theta_{k_{y3}}$), the fourth direction of arrival being different from the first, second and third directions of arrival, and
- a fourth pair of pulses of invariant characteristics equal to the second invariant characteristic ($CTI_{j_{x2}}$), with directions of arrival respectively equal to the third and fourth directions of arrival ($\Theta_{k_{y2}}$, $\Theta_{k_{y4}}$).

7. The method according to claim 6, wherein each group makes it possible to determine the respective distances ($d_1$, $d_2$) of two of the sources ($E_1$, $E_2$) to be located from the detector (R), said distances ($d_1$, $d_2$) being calculated:

- for each group of two pairs of pulses, from the following equations:

$$\begin{cases} d_1 = \dfrac{\Delta_{S_1/E_2}{}^2 + 2\Delta_{S_1/E_2}\cdot d_2}{2\Delta_{S_1/E_2} + 2d_2\bigl(1 - \cos(\alpha_{E_2 S_1})\bigr)} \\ d_2 = \dfrac{\Delta_{S_2/E_1}{}^2 + 2\Delta_{S_2/E_1}\cdot d_1}{2\Delta_{S_2/E_1} + 2d_1\bigl(1 - \cos(\alpha_{E_1 S_2})\bigr)} \end{cases}$$

- for each group of three pairs of pulses, from the following equations:

$$\begin{cases} \dfrac{\Delta_{S_1/E_1}{}^2 + 2\Delta_{S_1/E_1}\cdot d_1}{2\Delta_{S_1/E_1} + 2d_1\left(1 - \cos\left(\alpha_{E_1 S_1}\right)\right)} = \dfrac{\Delta_{S_1/E_2}{}^2 + 2\Delta_{S_1/E_2}\cdot d_2}{2\Delta_{S_1/E_2} + 2d_2\left(1 - \cos\left(\alpha_{E_2 S_1}\right)\right)} \\[3ex] d_2 = \dfrac{\Delta_{S_2/E_1}{}^2 + 2\Delta_{S_2/E_1}\cdot d_1}{2\Delta_{S_2/E_1} + 2d_1\left(1 - \cos\left(\alpha_{E_1 S_2}\right)\right)} \end{cases}$$

or

$$\begin{cases} d_1 = \dfrac{\Delta_{S_1/E_2}{}^2 + 2\Delta_{S_1/E_2}\cdot d_2}{2\Delta_{S_1/E_2} + 2d_2\left(1 - \cos\left(\alpha_{E_2 S_1}\right)\right)} \\[3ex] \dfrac{\Delta_{S_2/E_1}{}^2 + 2\Delta_{S_2/E_1}\cdot d_1}{2\Delta_{S_2/E_1} + 2d_1\left(1 - \cos\left(\alpha_{E_1 S_2}\right)\right)} = \dfrac{\Delta_{S_2/E_2}{}^2 + 2\Delta_{S_2/E_2}\cdot d_2}{2\Delta_{S_2/E_2} + 2d_2\left(1 - \cos\left(\alpha_{E_2 S_2}\right)\right)} \end{cases}$$

o for each group of four pairs of pulses, from the following equations:

$$\begin{cases} \dfrac{\Delta_{S_1/E_1}{}^2 + 2\Delta_{S_1/E_1}\cdot d_1}{2\Delta_{S_1/E_1} + 2d_1\left(1 - \cos\left(\alpha_{E_1 S_1}\right)\right)} = \dfrac{\Delta_{S_1/E_2}{}^2 + 2\Delta_{S_1/E_2}\cdot d_2}{2\Delta_{S_1/E_2} + 2d_2\left(1 - \cos\left(\alpha_{E_2 S_1}\right)\right)} \\[3ex] \dfrac{\Delta_{S_2/E_1}{}^2 + 2\Delta_{S_2/E_1}\cdot d_1}{2\Delta_{S_2/E_1} + 2d_1\left(1 - \cos\left(\alpha_{E_1 S_2}\right)\right)} = \dfrac{\Delta_{S_2/E_2}{}^2 + 2\Delta_{S_2/E_2}\cdot d_2}{2\Delta_{S_2/E_2} + 2d_2\left(1 - \cos\left(\alpha_{E_2 S_2}\right)\right)} \end{cases}$$

Where

- $\Delta_{S_1/E_1} = c\cdot \tau_{S_1/E_1}$, $\Delta_{S_2/E_2} = c\cdot \tau_{S_2/E_2}$, $\Delta_{S_1/E_2} = c\cdot \tau_{S_1/E_2}$, $\Delta_{S_2/E_1} = c\cdot \tau_{S_2/E_1}$,
- $d_1$ is the distance from the first source $E_1$ to the detector (R),
- $d_2$ is the distance from the second source $E_2$ to the detector (R),
- c is the propagation speed of the electromagnetic waves,
- $\tau_{S_1/E_1}$ is the difference in date of arrival among the pulses received by reflection on a first reflector relative to the pulses received directly from the first source,
- $\tau_{S_2/E_2}$ is the difference in date of arrival among the pulses received by reflection on a second reflector relative to the pulses received directly from the second source,
- $\tau_{S_1/E_2}$ is the difference in date of arrival among the pulses received by reflection on the first reflector relative to the pulses received directly from the second source,
- $\tau_{S_2/E_1}$ is the difference in date of arrival among the pulses received by reflection on the second reflector relative to the pulses received directly from the first source,
- $\alpha_{E_2 S_2}$ is the angular deviation between the second source and the second reflector seen from the detector (R),
- $\alpha_{E_1 S_1}$ is the angular deviation between the first source and the first reflector seen from the detector (R),
- $\alpha_{E_1 S_1}$ is the angular deviation between the second source and the first reflector seen from the detector (R), and
- $\alpha_{E_1 S_2}$ is the angular deviation between the second source and the first reflector seen from the detector (R).

8. The method according to claim 7, wherein the determination step comprises calculating a histogram, for each pair, from differences in dates of arrival calculated for said pair and determining a main lag of the pulses received by reflection relative to the pulses received directly from the calculated histogram, the differences in date of arrival ($\tau_{S_1/E_1}$, $\tau_{S_2/E_2}$, $\tau_{S_1/E_2}$, $\tau_{S_2/E_1}$) of the equations of claim 7 respectively being equal to one of the determined main lags.

9. The method according to any one of claims 1 to 8, wherein the invariant characteristics ($CTI_{jx}$) of each pulse comprise at least one of the features from among: the width of the pulse, the carrier frequency of the pulse and the intentional intra-pulse modulation.

10. A detector (R) for locating at least two electromagnetic pulse emission sources ($E_1$, $E_2$) in an environment, the environment comprising at least two reflectors ($S_1$, $S_2$), the detector (R) being able to carry out the steps of the method according to any one of claims 1 to 9.

FIG.1

FIG.2

FIG.3

FIG.4

FIG.5

FIG.6

Réception des impulsions ⎯⎯ 100

caractérisation des impulsions ⎯⎯ 110

Découpage ⎯⎯ 120

Tri des impulsions ⎯⎯ 130

Identification des impulsions reçues
en direct et en réfléchi ⎯⎯ 140

Regroupement par paire ⎯⎯ 150

Calcul de différences de dates d'arrivée ⎯⎯ 160

Détermination de la distance de
chaque source au détecteur ⎯⎯ 170

FIG.7

**RÉFÉRENCES CITÉES DANS LA DESCRIPTION**

**Documents brevets cités dans la description**

- US 20110140966 A
- EP 2428810 A
- US 20150323642 A